(19) Europäisches Patentamt
European Patent Office
Office européen des brevets

(11) **EP 3 383 923 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**12.04.2023 Patentblatt 2023/15**

(45) Hinweis auf die Patenterteilung:
**14.10.2020 Patentblatt 2020/42**

(21) Anmeldenummer: **16805802.2**

(22) Anmeldetag: **02.12.2016**

(51) Internationale Patentklassifikation (IPC):
*C08F 6/00* [(2006.01)]   *C08L 25/12* [(2006.01)]
*C08L 55/02* [(2006.01)]

(52) Gemeinsame Patentklassifikation (CPC):
(C-Sets verfügbar)
**C08L 25/12; C08F 6/005; C08F 6/008; C08L 55/02**

(Forts.)

(86) Internationale Anmeldenummer:
**PCT/EP2016/079556**

(87) Internationale Veröffentlichungsnummer:
**WO 2017/093468 (08.06.2017 Gazette 2017/23)**

(54) **VERFAHREN ZUR HERSTELLUNG VON ABS-KUNSTSTOFFEN MIT VERBESSERTEN EIGENSCHAFTEN**

METHOD FOR PRODUCING ABS PLASTICS HAVING IMPROVED PROPERTIES

PROCÉDÉ DE PRODUCTION DE MATÉRIAUX SYNTHÉTIQUES DE TYPE ABS PRÉSENTANT DES PROPRIÉTÉS AMÉLIORÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2015 EP 15197523**
**27.09.2016 EP 16190743**

(43) Veröffentlichungstag der Anmeldung:
**10.10.2018 Patentblatt 2018/41**

(73) Patentinhaber: **INEOS Styrolution Group GmbH**
**60325 Frankfurt am Main (DE)**

(72) Erfinder:
• **MICHELS, Gisbert**
 **51375 Leverkusen (DE)**
• **NIESSNER, Norbert**
 **67159 Friedelsheim (DE)**

(74) Vertreter: **Jacobi, Markus Alexander**
**Patentanwälte**
**Isenbruck Bösl Hörschler PartG mbB**
**Eastsite One**
**Seckenheimer Landstraße 4**
**68163 Mannheim (DE)**

(56) Entgegenhaltungen:
**WO-A1-2014/122179   WO-A1-2016/184765**
**DE-A1- 19 547 975   GB-A- 1 335 353**
**US-A1- 2004 132 905**

EP 3 383 923 B2

(52) Gemeinsame Patentklassifikation (CPC): (Forts.)

C-Sets
**C08F 6/005, C08L 55/02;**
**C08F 6/008, C08L 55/02;**
**C08L 25/12, C08L 55/02;**
**C08L 55/02, C08L 25/12**

**Beschreibung**

Die Erfindung betrifft ein Verfahren zur Herstellung von thermoplastischen Formmassen auf Basis von Acrylnitril-Butadien-Styrol-Copolymeren (ABS) mit verbesserten Oberflächeneigenschaften, insbesondere einer verbesserten Beständigkeit der Oberflächenqualität bei einer Lagerung in feucht-warmer Umgebung, und mit vermindertem Gehalt an Restmonomeren. Ferner betrifft die Erfindung die Verwendung eines Fließbetttrockners und/oder eines Stromtrockners bei der Herstellung von thermoplastischen ABS-Formmassen zur Verbesserung der Oberflächenqualität. Ferner betrifft die Erfindung die Verwendung eines Fließbetttrockners und/oder eines Stromtrockners bei der Herstellung von thermoplastischen ABS-Formmassen mit einem verminderten Gehalt an Restmonomeren. Ebenfalls Gegenstand der Erfindung sind ABS-Formmassen, die mittels des erfindungsgemäßen Verfahrens hergestellt werden können, sowie Formteile (z.B. Formkörper, Folien und Beschichtungen), die aus den erfindungsgemäßen thermoplastischen Formmassen hergestellt werden können.

Acrylnitril-Butadien-Styrol-Copolymere (ABS) und Acrylnitril-Butadien-Methylstyrol-Copolymere werden schon seit vielen Jahren in großen Mengen als thermoplastische Formmassen für die Herstellung von Formteilen aller Art eingesetzt. Es ist bekannt, Styrol-Acrylnitril-Copolymere (SAN) oder Methylstyrol-Acrylnitril-Copolymere durch Einarbeiten von Pfropfkautschuken, beispielsweise gepfropften Polybutadien-Kautschuken, im Hinblick auf eine bessere Schlagzähigkeit zu modifizieren. Grundsätzlich kann die Herstellung von solchen schlagzäh-modifizierten SAN-Formmassen durch Pfropfpolymerisation von Styrol und Acrylnitril in Gegenwart eines Polybutadien-Kautschuks und/oder durch nachträgliches Abmischen eines Pfropfcopolymers mit einer separat hergestellten polymeren Styrol-Acrylnitril-Matrix erfolgen. Dabei kann das Eigenschaftsspektrum der Formmassen und der daraus hergestellten Formteile in weiten Bereichen variiert werden.

Oftmals ist es üblich, die mittlere Teilchengröße des Kautschuks vor der Pfropfpolymerisation durch Agglomeration gezielt einzustellen, da die Größe der Kautschukpartikel einen wesentlichen Einfluss auf die physikalischen Eigenschaften der späteren thermoplastischen Formmassen hat. Diese Agglomeration kann beispielsweise durch die Umsetzung des Kautschuks mit einer Salzlösung oder einer Salz/Säurelösung erfolgen. In WO 2014/170407 ist beispielsweise die Agglomeration unter Verwendung eines speziellen agglomerierend wirkenden Copolymers beschrieben. In WO 2012/022710 ist beispielsweise die Agglomeration unter Verwendung von Essigsäureanhydrid beschrieben.

Anschließend wird ein Pfropfcopolymer typischerweise durch Umsetzung des agglomerierten Kautschuks mit Styrol und Acrylnitril unter Einsatz eines Initiators hergestellt (Pfropfcopolymerisation). Solche Verfahren sind beispielsweise in EP-A 022 200 beschrieben. Es ist auch üblich, das Pfropfcopolymer nach der Pfropfpolymerisation zu waschen und zu trocknen. Im Dokument EP-A 0 734 825 wird die Entwässerung und Trocknung eines ABS-Pfropfcopolymers in einem Extruder beschrieben.

Neben den besonders vorteilhaften mechanischen Eigenschaften von ABS-Formmassen, wie hohe Zähigkeit (Schlagzähigkeit, Kerbschlagzähigkeit), hohe Elastizität (E-Modul), gute Verarbeitbarkeit (thermoplastische Fließfähigkeit, MVR), und hohe Wärmeformbeständigkeit, sind insbesondere die Oberflächeneigenschaften, wie Glanz, Glätte, Homogenität, gleichmäßiges Aussehen, von besonderer Bedeutung. ABS-Formmassen, bzw. die daraus hegestellten Formteile, sollen insbesondere eine gute Oberflächenhomogenität, d.h. eine Oberfläche ohne Störungen, wie Vertiefungen, Risse oder Salzeinlagerungen, aufweisen. Ganz wesentlich für bestimmte Einsatzgebiete ist in diesem Zusammenhang der Erhalt der Oberflächenhomogenität unter feucht-warmen Umgebungsbedingungen. Eine feucht-warme Umgebung bezeichnen im Allgemeinen Bedingungen, die eine Temperatur und eine Luftfeuchte umfassen, welche über den üblichen Werten von 15 bis 25 °C und 30 bis 60 % relativer Luftfeuchte liegen. Zudem können feucht-warme Umgebungsbedingungen insbesondere den direkten Kontakt der betreffenden Oberfläche mit flüssigem Wasser, z.B. Kondenswasser, umfassen.

Die herstellungsbedingt vorhandenen Salzeinlagerungen in der ABS-Formmasse, bzw. in dem daraus hergestellten Formteil, bewirken oftmals eine Verschlechterung der Oberflächenqualität, was insbesondere nach der Extrusion der Formmasse in Erscheinung tritt. Zudem nehmen die Salzeinlagerungen unter feucht-warmen Umgebungsbedingungen Feuchtigkeit auf, vergrößern sich und lösen sich gegebenenfalls auf. Hierbei entstehen Defekte an der Oberfläche (Stippen), wie weiße Flecken, Vertiefungen (Kavitäten) und/oder Risse, was zu einer Verschlechterung der Oberflächenqualität, insbesondere der Oberflächenhomogenität, führt.

In den Dokumenten WO 2001/62812, WO 2001/62848, DE-A 19649255 und WO 2004/050765 werden ABS-Formmassen beschrieben, welche mindestens zwei Pfropfkautschukpolymere aufweisen, wobei die Pfropfkautschuke zum Beispiel durch Persulfat-Initiierung hergestellt werden können. Die hier beschriebenen ABS-Formmassen weisen zwar eine hohe Zähigkeit und eine gute Verarbeitbarkeit auf, allerdings verschlechtert sich typischerweise die Oberflächenhomogenität der Formmassen unter feucht-warmen Umgebungsbedingungen.

Die Salzeinlagerungen in ABS-Formmassen resultieren in der Regel aus Salzen und Säuren, die bei der Herstellung der ABS-Formmassen eingesetzt werden, insbesondere aus den Salzen und Säuren, welche bei der Fällung des Pfropfcopolymers als Koagulierungsmittel eingesetzt werden, beispielsweise Alkali-, Erdalkali- oder AluminiumSalze wie Chloride, Sulfate, Nitrate, Phosphate, Acetate, Formiate, Aluminate oder Carbonate. Das Entfernen dieser Salzfracht in nachgeschalteten Wasch- und Reinigungsschritten ist oftmals aufwendig und nur unter hohem Energie- und Wasseraufwand möglich. Eine weitere Möglichkeit, die nachteilige Bildung von Oberflächenstörungen (Stippen) zu vermeiden, besteht darin, die Formmasse nach der feucht-warmen Lagerung nochmals zu extrudieren, was einen hohen zusätzlichen technischen Aufwand darstellt.

In den Dokumenten WO 2013/160029 und WO 2013/160249 sind Polymerzusammensetzungen, insbesondere ABS-Zusammensetzungen, und Verfahren zu deren Herstellung beschrieben, wobei sich die ABS-Zusammensetzungen durch eine verbesserte Oberfläche nach Lagerung unter warm-feuchten Bedingungen auszeichnen sollen. Das Dokument WO 2013/160029 beschreibt Polymerzusammensetzungen enthaltend ein durch Emulsionspolymerisation hergestelltes Pfropfcopolymer, wobei das Pfropfcopolymer durch ein Erdalkalisalz im alkalischen Medium gefällt wurde und Natriumionen und Magnesium- und/oder Calciumionen in einem Verhältnis von Na/(Mg+Ca) von 0,1 bis 1 enthält. Das Dokument WO 2013/160249 beschreibt, dass die Bildung von großen Salzkristalliten durch die Durchführung einer Schmelzfiltration des gefällten Pfropfcopolymers verhindert werden kann. In den ABS-Zusammensetzungen gemäß WO 2013/160249 sind die enthaltenen Salze in Form von amorphen oder kristallinen Einlagerungen mit einer Dimension von kleiner 60 $\mu$m enthalten.

Das Dokument WO 2014/122179 beschreibt ein Verfahren zur Herstellung von ABS-Zusammensetzungen mit verbesserten Oberflächeneigenschaften, wobei Granulate, enthaltend das durch Emulsionspolymerisation hergestellte ABS-Pfropfpolymer mit herstellungsbedingten Salzinklusionen, für mindestens 24 h in Wasser gelagert werden.

Aus der EP-A 1 567 596 ist bekannt, dass co-gefällte Pfropfcopolymer-Mischungen zu einer Verbesserung der Oberflächenqualität führen können, wobei mindestens ein Pfropfcopolymer durch eine Redox-Initiierung und mindestens ein weiteres Pfropfcopolymer durch Persulfat-Initiierung hergestellt wird.

Weiterhin ist es wünschenswert, ABS-Formmassen mit einem möglichst niedrigen Gehalt an Restmonomeren, insbesondere an Acrylnitril und/oder Styrol, zu erhalten. Im Stand der Technik sind verschiedene Verfahren beschrieben, durch die der Gehalt an Monomeren im Polymer reduziert werden soll. DE-A 10 2007 029 010 beschreibt ein Verfahren zum Compoundieren von zwei Polymeren, beispielsweise ABS und Polycarbonat, unter Verwendung eines Extruders mit Entgasungszonen, wobei ein inertes Schleppmittel eingesetzt wird. DE-A 38 40 293 beschreibt ein Verfahren zum Entfernen von niedermolekularen Verbindungen aus Polymeren, wobei ein inertes Extraktionsgas in einem Extruder mit dem Polymer vermischt wird. WO 2010/094416 ist gerichtet auf ein Verfahren zur Herstellung einer Polymerzusammensetzung, z.B. PC/ABS-Blends, mit einem reduzierten Anteil an flüchtigen Verbindungen, wobei die Polymere, welche einen gewissen Wasseranteil aufweisen, in einem Extruder mit spezieller Entgasungszone aufgeschmolzen werden. EP-A 1 415 693 beschreibt ein Verfahren, bei dem eine Mischung aus Polymer, Restmonomeren, Oligomeren und Lösungsmittel durch mehrere Düsen in einen Entgasungsbehälter extrudiert wird.

Nachteilig ist, dass die im Stand der Technik beschriebenen Verfahren zur Reduzierung des Gehalts an Restmonomeren oftmals einen hohen apparativen Aufwand, den Einsatz eines Extraktionsgases und das erneute Aufschmelzen des Polymers nach der Herstellung erfordern.

Es besteht somit ein Bedarf, ein einfaches und kostengünstiges Herstellungsverfahren für ABS-Formmassen bereitzustellen, wobei die erhaltenen Formmassen, neben den bekannten guten mechanischen Eigenschaften, eine verbesserte Oberflächenqualität, bevorzugt eine verbesserte Stabilität der Oberflächenhomogenität gegenüber einer feucht-warmen Umgebung, aufweisen. Zudem soll der Gehalt an Restmonomeren im ABS-Pfropfcopolymer und damit in der ABS-Formmasse verringert werden, ohne dass ein zusätzlicher apparativ aufwendiger Extrudier-Schritt notwendig ist. Insbesondere soll der Gesamtgehalt an Restmonomeren im ABS-Pfropfcopolymer auf einen Wert kleiner oder gleich 2.000 ppm, bevorzugt kleiner oder gleich 1.000 ppm, jeweils bezogen auf das trockene ABS-Pfropfcopolymer, vermindert werden.

Es wurde überraschend gefunden, dass besonders vorteilhafte ABS-Formmassen erhalten werden, wenn das Trocknen des ABS-Pfropfcopolymers (Pfropfkautschuks) in einem Fließbetttrockner (auch Wirbelbett-Trockner genannt) oder einem Stromtrockners (auch Flashtrockner genannt) oder mit einer Kombination eines Fließbetttrockners und eines Stromtrockners erfolgt. Es wurde insbesondere gefunden, dass sich eine schnelle und gleichmäßige Trocknung - wie sie in einem Fließbetttrockner oder Stromtrockner bei geeigneten Temperaturen und Verweilzeiten erreicht werden kann - vorteilhaft auf die Oberflächenqualität der ABS-Formmassen bzw. daraus hergestellter Formteile auswirkt. Durch das erfindungsgemäße Verfahren können überraschenderweise insbesondere ABS-Formmassen mit möglichst wenig und/oder möglichst kleinen Salzeinlagerungen in einfacher Weise erhalten werden.

Es wurde zudem überraschend gefunden, dass durch die beschriebene Trocknung des Pfropfcopolymers der Gehalt an Restmonomeren, insbesondere der Gehalt an Acrylnitril, 4-Vinylcyclohexen und Styrol, deutlich reduziert werden kann. Die mittels des erfindungsgemäßen Verfahrens hergestellten ABS-Formmassen zeichnen sich daher durch einen sehr geringen Gehalt an Restmonomeren aus, ohne dass ein zusätzlicher Extrudier- und/oder Entgasungsschritt notwendig ist. Insbesondere können ABS-Pfropfcopolymere mit einem Gehalt an Restmonomeren kleiner oder gleich 2.000 ppm, insbesondere kleiner oder gleich 1.000 ppm, jeweils bezogen auf das trockene Pfropfcopolymer, erhalten werden. Es wurde insbesondere gefunden, dass der Gehalt an Restmonomer deutlich gesenkt werden kann, wenn nach dem Erreichen eines Wassergehalts von 2 Gew.-%, insbesondere nach Erreichen eines Wassergehaltes von 1 Gew.-%, 5 bis 40 min weiter getrocknet wird. Insbesondere werden hierbei die übrigen Eigenschaften der ABS-Formmassen, z.B. mechanischen Eigenschaften und Oberflächeneigenschaften, nicht nachteilig beeinflusst.

Fließbetttrockner sind Geräte, die absatzweise oder kontinuierlich, insbesondere kontinuierlich betrieben werden. Fließbetttrockner werden zum Beispiel in Krischer/Kröll, Trocknungstechnik (Zweiter Band, Trockner und Trocknungsverfahren, Springer-Verlag, 1959, S. 275-282) beschrieben. Es ist zudem bekannt Fließbetttrockner einzusetzen, die einen oder mehrere ins Fließbett integrierte Wärmetauscher aufweisen. Durch den Einsatz von Wärmetauschern kann insbesondere die nötige Trocknungsenergie ins Fließbett eingebracht werden. Solche Fließbetttrockner sind beispielsweise in D. Gehrmann, et al., Trocknungstechnik in der Lebensmittelindustrie (Behr's Verlag GmbH & Co.KG, 1. Auflage 2009, Abschnitt 2.5.3 Statische Wirbelschichttrockner, Seite 143-145) beschrieben.

Strom- oder Flashtrockner sind Geräte, die insbesondere kontinuierlich betrieben werden. Sie sind beispielsweise in Krischer/Kröll, Trocknungstechnik (Zweiter Band, Trockner und Trocknungsverfahren von K. Kröll, Springer-Verlag, 1959, S. 282 ff) beschrieben. Die Publikation Yongchun Z. et al. (Explosion Risk Management of ABS Powder Processes, Proceedings of the 8th International Conference on Measurement and Control of Granular Materials (MCGM), 2009) beschreibt die sicherheitstechnischen Probleme bei der Trocknung von ABS in Fließbetttrocknern.

Gegenstand der Erfindung ist ein Verfahren zur Herstellung einer thermoplastischen Formmasse enthaltend:

A: 5 bis 95 Gew.-%, bevorzugt 40 bis 80 Gew.-%, mindestens eines thermoplastischen Copolymers A hergestellt aus:

A1: 50 bis 95 Gew.-%, bevorzugt 65 bis 80 Gew.-%, besonders bevorzugt 69 bis 80 Gew.-%, bezogen auf das Copolymer A, eines Monomers A1, ausgewählt aus Styrol, $\alpha$-Methylstyrol oder Mischungen von Styrol und mindestens einem weiteren Monomer ausgewählt aus $\alpha$-Methylstyrol, p-Methylstyrol und (Meth)acrylsäure-$C_1$-$C_8$-alkylester (z.B. Methylmethacrylat, Ethylmethacrylat, n-Butylacrylat, t-Butylacrylat),

A2: 5 bis 50 Gew.-%, bevorzugt 20 bis 35 Gew.-%, besonders bevorzugt 20 bis 31 Gew.-%, bezogen auf das Copolymer A, eines Monomers A2, ausgewählt aus Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid),

B: 5 bis 95 Gew.-%, bevorzugt 20 bis 60 Gew.-%, mindestens eines Pfropfcopolymers B, enthaltend:

B1: 40 bis 85 Gew.-%, bevorzugt 50 bis 80 Gew.-%, besonders bevorzugt 55 bis 70 Gew.-%, bezogen auf das Pfropfcopolymer B, mindestens einer Pfropfgrundlage B1, welche erhalten wird durch Emulsionspolymerisation von:

B11: 50 bis 100 Gew.-%, bevorzugt 80 bis 100 Gew.-%, bezogen auf die Pfropfgrundlage B1, Butadien,

B12: 0 bis 50 Gew.-%, bevorzugt 0 bis 20 Gew.-%, besonders bevorzugt 0 bis 10 Gew.-%, bezogen auf die Pfropfgrundlage B1, mindestens eines weiteren Monomers B12 ausgewählt aus Styrol, $\alpha$-Methylstyrol, Acrylnitril, Methacrylnitril, Isopren, Chloropren, $C_1$-$C_4$-Alkylstyrol, $C_1$-$C_8$-Alkyl(meth)acrylat, Alkylenglykol-di(meth)acrylat und Divinylbenzol;

wobei die Summe B11 + B12 gerade 100 Gew.-% ergibt; und

B2: 15 bis 60 Gew.-%, bevorzugt 20 bis 50 Gew.-%, besonders bevorzugt 30 bis 45 Gew.-%, bezogen auf das Pfropfcopolymer B, einer Pfropfhülle B2, welche erhalten wird durch Emulsionspolymerisation in Gegenwart der mindestens einen Pfropfgrundlage B1 von:

B21 50 bis 95 Gew.-%, bevorzugt 65 bis 80 Gew.-%, besonders bevorzugt 75 bis 80 Gew.-%, bezogen auf die Pfropfhülle B2, eines Monomers B21, ausgewählt aus Styrol oder Mischungen von Styrol und mindestens einem weiteren Monomer ausgewählt aus $\alpha$-Methylstyrol, p-Methylstyrol und (Meth)acrylsäure-$C_1$-$C_8$-alkylester (z. B. Methylmethacrylat, Ethylmethacrylat, n-Butylacrylat, t-Butylacrylat);

B22 5 bis 50 Gew.-%, bevorzugt 20 bis 35 Gew.-%, besonders bevorzugt 20 bis 25 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid);

wobei ie Gesamtsumme aus Pfropfgrundlage B1 und Pfropfhülle B2 gerade 100 Gew.-% ergibt; und
K: 0 bis 90 Gew.-%, bevorzugt 0 bis 40 Gew.-%, besonders bevorzugt 0 bis 5 Gew.-%, oftmals 0,1 bis 5 Gew.-% mindestens einer weiteren Komponente K,

umfassend die Schritte:

a) Fällen des mindestens einen Pfropfcopolymers B nach der Emulsionspolymerisation durch Zugabe einer Fällungslösung enthaltend mindestens ein Salz und mindestens eine anorganische Säure;

b) mechanisches Entwässern des gefällten Pfropfcopolymers B, bevorzugt mittels Zentrifugation und/oder Filtration, wobei ein Pfropfcopolymer B mit einem Wassergehalt von kleiner oder gleich 50 Gew.-% erhalten wird;

c) Trocknen des entwässerten Pfropfcopolymers B unter Verwendung eines Trocknungsgases, wobei das Pfropfcopolymer B in dem Trocknungsgas bewegt wird und das Trocknungsgas eine Temperatur im Bereich von 50 bis 160 °C aufweist;

d) Vermischen des thermoplastischen Copolymers A, des getrockneten Pfropfcopolymers B und optional der weiteren Komponente(n) K.

Bevorzugt umfasst das oben beschriebene Verfahren als Schritt a):

a) Fällen des mindestens einen Pfropfcopolymers B nach der Emulsionspolymerisation durch Zugabe einer Fällungslösung enthaltend mindestens ein Salz.

Die mittels des erfindungsgemäßen Verfahrens erhaltenen Formmassen zeichnen sich insbesondere dadurch aus, dass nach Lagerung der Formmasse bzw. der daraus hergestellten Formteile unter feucht-warmen Umgebungsbedingungen signifikant weniger oder gar keine Oberflächenstörung vorhanden sind, die insbesondere durch Salzeinlagerungen (so genannte Salzstippen) verursacht werden. Besonders bevorzugt weisen die nach dem erfindungsgemäßen Verfahren hergestellten thermoplastischen ABS-Formmassen bzw. daraus hergestellte Formteile nach Lagerung unter feucht-warmen Umgebungsbedingungen auf einer Oberfläche von 150 cm$^2$ weniger als 15, bevorzugt weniger als 10, besonders bevorzugt weniger als 5 Oberflächenstörungen auf. Die sonstigen Eigenschaften der mit dem erfindungsgemäßen Verfahren erhaltenen ABS-Formmassen, wie z. B. mechanischen Eigenschaften, werden nicht nachteilig beeinflusst.

Gegenstand der Erfindung ist zudem die Verwendung eines Fließbetttrockners (Wirbelschicht-Trockner) und/oder eines Stromtrockners (Flashtrockner) bei der Herstellung einer thermoplastischen ABS-Formmasse wie oben beschrieben zur Trocknung des im Folgenden näher beschriebenen Pfropfcopolymers B zur Verbesserung der Oberflächenqualität der thermoplastischen ABS-Formmasse, bzw. des daraus hergestellten Formteils. Insbesondere betrifft die erfindungsgemäße Verwendung die Verbesserung der Oberflächenqualität, wobei sich die Oberfläche der thermoplastischen Formmasse, bzw. des daraus hergestellten Formteils, während der Lagerung unter feucht-warmen Umgebungsbedingungen nicht nachteilig verändert.

Unter ABS-Formmassen im Sinne der vorliegenden Erfindung sind Formmassen enthaltend mindestens 10 % Gew.-%, bevorzugt mindestens 60 Gew.-%, besonders bevorzugt mindestens 95 Gew.-%, des thermoplastischen Copolymers A und des Pfropfcopolymers B (in der Summe) wie oben beschrieben zu verstehen. Bevorzugt enthält die ABS-Formmasse ausschließlich das thermoplastische Copolymer A und das Pfropfcopolymer B als polymere Komponenten. ABS-Formmassen im Sinne der vorliegenden Erfindung sind auch Polymerblends enthaltend das thermoplastische Copolymer A und das Pfropfcopolymer B wie oben beschrieben und mindestens ein kautschukfreies nicht aus Vinylmonomeren aufgebautes Thermoplastharz, beispielsweise ein Polykondensat, bevorzugt ausgewählt aus Polycarbonaten, Polyestercarbonaten, Polyestern und Polyamiden.

Der Ausdruck (Meth)acryl, beispielsweise in der Bezeichnung (Meth)acrylsäure oder (Meth)acrylsäure-$C_1$-$C_8$-alkylester, umfasst im Sinne der vorliegenden Erfindung die entsprechenden Acryl- und/oder Methacryl-Verbindungen.

Die vorliegende Erfindung betrifft darüber hinaus thermoplastische Formmassen, die nach dem im Folgenden beschriebenen erfindungsgemäßen Verfahren hergestellt werden können, und Formteile hergestellt aus der erfindungsgemäßen Formmasse.

Thermoplastisches Copolymer A

Bevorzugt handelt es sich bei dem thermoplastischen Copolymer A um ein kautschukfreies Copolymer A. In einer bevorzugten Ausführungsform handelt es sich bei Monomer A1 um Styrol oder $\alpha$-Methylstyrol bei Monomer A2 um Acrylnitril. In einer weiter bevorzugten Ausführungsform handelt es sich bei Monomer A1 um eine Mischung aus Styrol und $\alpha$-Methylstyrol und bei Monomer A2 um Acrylnitril.

Bevorzugt enthält die beschriebene Mischung für Monomer A1 mindestens 10 Gew.-%, bevorzugt mindestens 50 Gew.-% und besonders bevorzugt mindestens 90 Gew.-% Styrol.

Insbesondere bevorzugt ist das thermoplastische Copolymer A hergestellt aus (bzw. besteht aus):

50 bis 95 Gew.-%, bevorzugt 65 bis 80 Gew.-%, besonders bevorzugt 69 bis 80 Gew.-%, insbesondere bevorzugt 71 bis 80 Gew.-%, bezogen auf das Copolymer A, des Monomers A1, ausgewählt aus Styrol, $\alpha$-Methylstyrol oder Mischungen von Styrol und $\alpha$ -Methylstyrol, und

5 bis 50 Gew.-%, bevorzugt 20 bis 35 Gew.-%, besonders bevorzugt 20 bis 31 Gew.-%, insbesondere bevorzugt 20 bis 29 Gew.-%, bezogen auf das Copolymer A, eines Monomers A2, ausgewählt aus Acrylnitril oder Mischungen von Acrylnitril und Methacrylnitril.

Besonders bevorzugt ist ein thermoplastisches Copolymer A mit weniger oder gleich 30 Gew.-%, bezogen auf das gesamte Copolymer A, an Acrylnitril.

Das thermoplastische Copolymer A weist vorzugsweise mittlere Molekulargewichte $M_w$ im Bereich von 20.000 bis 200.000 g/mol auf. Bevorzugt weist das thermoplastische Copolymer A Grenzviskositäten [$\eta$] im Bereich von 20 bis 110 ml/g (gemessen in Dimethylformamid bei 25 °C) auf. Einzelheiten zur Herstellung des thermoplastischen Copolymers A sind beispielsweise in DE-A 24 20 358 und DE-A 27 24 360 beschrieben. Ebenso geeignete thermoplastischen Copolymere A sind auch in DE-A 1 971 3509 beschrieben. Die thermoplastischen Copolymere können sowohl durch rein thermische Initiierung als auch durch Zusatz von Initiatoren, insbesondere von Peroxiden, hergestellt werden. Geeignete thermoplastische Copolymere A können bevorzugt durch Masse- oder Lösungspolymerisation hergestellt werden.

Pfropfcopolymer B

Bevorzugt handelt es sich bei dem Pfropfcopolymer B um einen Polybutadien-Pfropfkautschuk. Das mindestens eine Pfropfcopolymer B wird hergestellt aus (bzw. besteht aus):
40 bis 85 Gew.-%, bevorzugt 50 bis 80 Gew.-%, besonders bevorzugt 55 bis 70 Gew.-%, bezogen auf das Pfropfcopolymer B, mindestens einer Pfropfgrundlage B1, und 15 bis 60 Gew.-%, bevorzugt 20 bis 50 Gew.-%, besonders bevorzugt 30 bis 45 Gew.-%, bezogen auf das Pfropfcopolymer B, einer Pfropfhülle B2, welche erhalten wird durch Emulsionspolymerisation der Monomere B21 und B22 in Gegenwart der mindestens einen Pfropfgrundlage B1, wobei die Gesamtsumme aus Pfropfgrundlage B1 und Pfropfhülle B2 gerade 100 Gew.-% ergibt. Bevorzugt ergibt die Summe B11 + B12 gerade 100 Gew.-%.

In einer bevorzugten Ausführungsform wird die mindestens einer Pfropfgrundlage B1 erhalten durch Emulsionspolymerisation von:

B11: 50 bis 100 Gew.-%, bevorzugt 80 bis 100 Gew.-%, bezogen auf die Pfropfgrundlage B1, Butadien,

B12: 0 bis 50 Gew.-%, bevorzugt 0 bis 20 Gew.-%, besonders bevorzugt 0 bis 10 Gew.-%, bezogen auf die Pfropfgrundlage B1, mindestens eines weiteren Monomers B12 ausgewählt aus Styrol und Acrylnitril;

wobei die Summe B11 + B12 gerade 100 Gew.-% ergibt.

Bevorzugt wird die mindestens eine Pfropfgrundlage B1 erhalten durch Emulsionspolymerisation von Butadien alleine. In einer weiteren Ausführungsform wird die mindestens einer Pfropfgrundlage B1 erhalten durch Emulsionspolymerisation von:

B11: 50 bis 99 Gew.-%, bevorzugt 80 bis 95 Gew.-%, bezogen auf die Pfropfgrundlage B1, Butadien,

B12: 1 bis 50 Gew.-%, bevorzugt 5 bis 20 Gew.-%, besonders bevorzugt 5 bis 10 Gew.-%, bezogen auf die Pfropfgrundlage B1, mindestens eines weiteren Monomers B12 ausgewählt aus Styrol und Acrylnitril;

wobei die Summe B11 + B12 gerade 100 Gew.-% ergibt.

Bevorzugt handelt es sich bei dem Monomer B21 um Styrol oder Mischungen von Styrol und mindestens einem weiteren Monomer ausgewählt aus $\alpha$-Methylstyrol, Methylmethacrylat, Ethylmethacrylat, n-Butylacrylat und t-Butylacrylat, besonders bevorzugt um Styrol oder Mischungen von Styrol und mindestens einem weiteren Monomer ausgewählt aus α-Methylstyrol und Methylmethacrylat.

Bevorzugt handelt es sich bei dem Monomer B22 um Acrylnitril oder Mischungen von Acrylnitril und mindestens einem weiteren Monomer ausgewählt aus Methacrylnitril, Maleinsäureanhydrid, N-Cyclohexylmaleimid und N-Phenylmaleimid, besonders bevorzugt um Acrylnitril oder Mischungen von Acrylnitril und mindestens einem weiteren Monomer ausgewählt aus Methacrylnitril und Maleinsäureanhydrid.

In einer besonders bevorzugten Ausführungsform handelt sich bei dem Monomer B21 um Styrol und bei dem Monomer B22 um Acrylnitril.

In einer bevorzugten Ausführungsform weist die Pfropfgrundlage B1 einen mittleren Teilchendurchmesser $d_{50}$ im Bereich von 100 bis 1000 nm auf.

In einer bevorzugten Ausführungsform weist die Pfropfgrundlage B1 einen Gelgehalt im Bereich von 30 bis 95 Gew.-% auf.

Typischerweise wird der mittleren Teilchendurchmesser $d_{50}$ durch Ultrazentrifugenmessung ermittelt, wie beispielsweise in W. Scholtan, H. Lange (Kolloid Z. u. Z. Polymere 250, S. 782 bis 796 (1972)) beschrieben.

Die angegebenen Werte für den Gelgehalt beziehen sich auf die Bestimmung nach der Drahtkäfigmethode in Toluol, wie beispielsweise in Houben-Weyl (Methoden der Organischen Chemie, Makromolekulare Stoffe, Teil 1, S. 307 (1961), Thieme Verlag Stuttgart) beschrieben.

Typischerweise können die Gelgehalte der mindestens einen Pfropfgrundlage B1 (Polybutadien-Latices), insbesondere der unterschiedlichen Pfropfgrundlagen B1-A, B1-B, B1-C und B1-D, wie unten beschrieben, in prinzipiell bekannter Weise durch Anwendung geeigneter Reaktionsbedingungen eingestellt werden. Üblicherweise führen beispielsweise eine hohe Reaktionstemperatur und/oder die Führung der Polymerisation bis zu hohem Umsatz sowie gegebenenfalls der Zusatz von vernetzend wirkenden Substanzen zur Erzielung eines hohen Gelgehaltes. Üblicherweise führen beispielsweise niedrige Reaktionstemperatur und/oder der Abbruch der Polymerisation vor Eintreten einer zu starken Vernetzung sowie gegebenenfalls der Zusatz von Molekulargewichtsreglern (wie beispielsweise n-Dodecylmercaptan oder t-Dodecylmercaptan) zur Erzielung eines niedrigen Gelgehaltes.

Bevorzugt wird die mindestens eine Pfropfgrundlage B1, insbesondere die unterschiedlichen Pfropfgrundlagen B1-A, B1-B, B1-C und B1-D wie unten beschrieben, durch Emulsionspolymerisation von Butadien als Monomer B11 nach der so genannten Saatpolymerisationstechnik hergestellt. Hierbei wird typischerweise zunächst ein feinteiliger Latex, vorzugsweise ein Polybutadien-Latex, als Saatlatex hergestellt und dann durch Zugabe von weiteren Monomeren, enthaltend oder bestehend aus Butadien, zu größeren Latex-Teilchen weiterpolymerisiert. Dies ist beispielsweise in Houben-Weyl, Methoden der Organischen Chemie, Makromolekulare Stoffe Teil 1, S. 339 (1961), Thieme Verlag Stuttgart, beschrieben. Dabei kann vorzugsweise nach einem Saat-Batch-Verfahren oder nach einem Saat-Zulauf-Verfahren gearbeitet werden.

Als Saatlatices werden vorzugsweise Butadien-Polymere, wie z. B. Polybutadien, Butadien/Styrol-Copolymere oder Butadien/Acrylnitril-Copolymere eingesetzt. Im Prinzip können auch andere feinteilige Latices enthaltend oder bestehend aus den Monomeren B12 verwendet werden, beispielsweise können Saatlatices aus Polystyrol, Styrol-Copolymeren, Polymethylmethacrylat oder Methylmethacrylatcopolymere verwendet werden. Bevorzugte werden reine Polybutadien-Latices als Saatlatices bei der Herstellung der Pfropfgrundlage B1, insbesondere bei der Herstellung der Pfropfgrundlagen B1-A, B1-B, B1-C und B1-D, eingesetzt.

In einer bevorzugten Ausführungsform umfasst das erfindungsgemäße Verfahren die Herstellung von mindestens zwei verschiedenen Pfropfcopolymeren B ausgehend von mindestens zwei verschiedenen Pfropfgrundlagen B1, wobei sich die Pfropfgrundlagen B1 durch ihren mittleren Teilchendurchmesser $d_{50}$ unterscheiden.

Bevorzugt werden eine oder mehrere der im Folgenden beschriebenen Pfropfgrundlagen B1-A, B1-B, B1-C und B1-D eingesetzt.

Bevorzugt stellt das Pfropfcopolymer B eine Mischung aus mindestens zwei, bevorzugt genau zwei, Pfropfcopolymeren B-I und B-II dar, wobei

Pfropfcopolymer B-I erhalten wird durch Emulsionspolymerisation einer Mischung der Monomere B21 und B22 in Gegenwart einer Pfropfgrundlage B1-A, welche einen mittleren Teilchendurchmesser $d_{50}$ im Bereich von 230 bis 330 nm, bevorzugt von 240 bis 320 nm, besonders bevorzugt von 250 bis 310 nm, aufweist, und einer Pfropfgrundlage B1-B, welche einen mittleren Teilchendurchmesser $d_{50}$ im Bereich von 340 bis 480 nm, bevorzugt von 350 bis 470 nm, besonders bevorzugt von 360 bis 460 nm, aufweist; und Pfropfcopolymer B-II erhalten wird durch Emulsionspolymerisation einer Mischung der Monomere B21 und B22 in Gegenwart einer Pfropfgrundlage B1-C, welche einen mittleren Teilchendurchmesser $d_{50}$ im Bereich von 10 bis 220 nm, bevorzugt von 20 bis 210 nm, besonders bevorzugt von 30 bis 200 nm, aufweist.

Bevorzugt werden die Pfropfgrundlagen B1-A, B1-B, B1-C und/oder B1-D, bevorzugt die Pfropfgrundlagen B1-A und B1-B, unter Verwendung eines Saatlatex mit einem mittleren Teilchendurchmesser $d_{50}$ im Bereich von 10 bis 220 nm, vorzugsweise 20 bis 210 nm und besonders bevorzugt 30 bis 200 nm hergestellt. Bei Verwendung von Saatlatices

mit mittleren Teilchendurchmessern $d_{50}$ oberhalb 80 nm, vorzugsweise oberhalb 90 nm und besonders bevorzugt oberhalb 100 nm werden auch die Saatlatices selbst vorzugsweise durch Saatpolymerisation hergestellt. Dazu werden vorzugsweise Saatlatices (B1-D) mit einem mittleren Teilchendurchmesser $d_{50}$ im Bereich von 10 bis 60 nm, vorzugsweise 20 bis 50 nm, eingesetzt. Bevorzugt wird die Pfropfgrundlage B1-C unter Verwendung eines Saatlatex B1-D mit einem mittleren Teilchendurchmesser $d_{50}$ im Bereich von 10 bis 60 nm, vorzugsweise 20 bis 50 nm, hergestellt. In einer bevorzugten Ausführungsform wird das Pfropfcopolymer B-I durch Emulsionspolymerisation in Gegenwart der Pfropfgrundlagen B1-A und/oder B1-B erhalten, wobei die Pfropfgrundlagen B1-A und/oder B1-B unter Verwendung der Pfropfgrundlage B1-C als Saatlatex hergestellt werden. In einer bevorzugten Ausführungsform wird das Pfropfcopolymer B-II durch Emulsionspolymerisation in Gegenwart der Pfropfgrundlage B1-C erhalten, wobei B1-C als Saatlatex für die Herstellung der Pfropfgrundlagen B1-A und/oder B1-B dient.

Das Gewichtsverhältnis der Pfropfcopolymere B-I und B-II kann in weiten Grenzen variiert werden. Bevorzugt stellt das Pfropfcopolymer eine Mischung der Pfropfcopolymere B-I und B-II dar, wobei das Gewichtsverhältnis Pfropfcopolymer B-I : Pfropfcopolymer B-II im Bereich von 90 : 10 bis 10 : 90, vorzugsweise 80 : 20 bis 20 : 80 und besonders bevorzugt 70 : 30 bis 35 : 65, liegt.

Pfropfcopolymer B-I wird erhalten durch Emulsionspolymerisation einer Mischung der Monomere B21 und B22 in Gegenwart einer Pfropfgrundlage B1-A, welche einen mittleren Teilchendurchmesser $d_{50}$ im Bereich von 230 bis 330 nm, bevorzugt von 240 bis 320 nm, besonders bevorzugt von 250 bis 310 nm, aufweist, und einer Pfropfgrundlage B1-B, welche einen mittleren Teilchendurchmesser $d_{50}$ im Bereich von 340 bis 480 nm, bevorzugt von 350 bis 470 nm, besonders bevorzugt von 360 bis 460 nm, aufweist. Das Gewichtsverhältnis der Feststoffe der Pfropfgrundlagen B1-A und B1-B bei der Emulsionspolymerisation des Pfropfcopolymers B-I kann in weiten Grenzen variiert werden. Typischerweise liegt das Gewichtsverhältnis der Feststoffe von B1-A : B1-B im Bereich von 90 : 10 bis 10 : 90, vorzugsweise von 80 : 20 bis 20 : 80, besonders bevorzugt von 70 : 30 bis 30 : 70 und ganz besonders bevorzugt von 60 : 40 bis 40 : 60. Die Feststoffe der Pfropfgrundlagen B1 (Butadien-Latices) werden typischerweise gravimetrisch durch Trocknung bei 180 °C für 23 Minuten in einem Umluft-Trockenschrank oder mittels einer Trockenwaage ermittelt.

Die Pfropfgrundlage B1-A weist bevorzugt einen mittleren Teilchendurchmesser $d_{50}$ im Bereich von 230 bis 330 nm, vorzugsweise von 240 bis 320 nm und besonders bevorzugt von 250 bis 310 nm, sowie einen Gelgehalt im Bereich von 30 bis 80 Gew.-%, bevorzugt von 40 bis 75 Gew.-% und besonders bevorzugt von 45 bis 70 Gew.-%, auf.

Die Pfropfgrundlage B1-B weist bevorzugt einen mittleren Teilchendurchmesser $d_{50}$ im Bereich von 340 bis 480 nm, bevorzugt von 350 bis 470 nm und besonders bevorzugt von 360 bis 460 nm, sowie einen Gelgehalt im Bereich von 50 bis 95 Gew.-%, bevorzugt von 55 bis 90 Gew.-% und besonders bevorzugt von 60 bis 85 Gew.-%, auf.

Die Pfropfgrundlage B1-C weist bevorzugt einen mittleren Teilchendurchmesser $d_{50}$ im Bereich von 10 bis 220 nm, bevorzugt von 20 bis 210 nm und besonders bevorzugt von 30 bis 200 nm, sowie einen Gelgehalt im Bereich von 30 bis 98 Gew.-%, bevorzugt von 40 bis 95 Gew.-% und besonders bevorzugt von 50 bis 92 Gew.-%, auf.

Der Saatlatex B1-D ist bevorzugt ein reiner Butadienlatex. Bevorzugt weist B1-D einen mittleren Teilchendurchmesser $d_{50}$ im Bereich von 10 bis 60 nm, bevorzugt von 20 bis 50 nm, sowie einen Gelgehalt im Bereich von 10 bis 95 Gew.-%, bevorzugt von 20 bis 90 Gew.-% und besonders bevorzugt von 30 bis 85 Gew.-%.

Die bei der Emulsionspolymerisation des Pfropfcopolymers B eingesetzten Monomeren sind vorzugsweise Mischungen aus Styrol und Acrylnitril im Gewichtsverhältnis 95 : 5 bis 50 : 50, besonders bevorzugt im Gewichtsverhältnis 80 : 20 bis 65 : 35.

Zusätzlich können bei der Herstellung der Pfropfgrundlage B1 und/oder bei der Emulsionspolymerisation des mindestens einen Pfropfcopolymers B Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf die gesamte Monomer-Menge bei der Emulsionspolymerisation). Geeignete Molekulargewichtsregler sind beispielsweise Alkylmercaptane, wie n-Dodecylmercaptan, t-Dodecylmercaptan; dimeres $\alpha$-Methylstyrol und Terpinolen.

Als Initiatoren bei der Herstellung der Pfropfgrundlage B1 und/oder bei der Emulsionspolymerisation des mindestens einen Pfropfcopolymers B können beliebige Initiatoren eingesetzt werden. Bevorzugt wird mindestens eine organische und/oder anorganische Peroxid-Verbindung (umfassend mindestens eine Peroxidgruppe R-O-O-H und/oder R-O-O-R), z.B. Wasserstoffperoxid, Cumolhydroperoxid, tert.-Butylhydroperoxid, p-Menthanhydroperoxid, Ammonium-, Kalium- und Natriumpersulfat, als Initiator verwendet. Insbesondere werden anorganische Peroxid-Salze, wie Peroxodisulfate (Persulfate), Perphosphate und Perborate von Ammonium, Natrium oder Kalium, eingesetzt. Besonders bevorzugt sind Natrium- und Kaliumpersulfate.

In einer bevorzugten Ausführungsform wird bei der bei der Emulsionspolymerisation des Pfropfcopolymers B ein anorganisches Peroxid-Salz, insbesondere ein anorganisches Peroxodisulfat-Salz, bevorzugt Natriumperoxodisulfat und/oder Kaliumperoxodisulfat, eingesetzt.

Als Emulgator bei der Herstellung der Pfropfgrundlage B1 und/oder bei der Emulsionspolymerisation zur Herstellung des mindestens einen Pfropfcopolymers B können typischerweise übliche anionische Emulgatoren eingesetzt werden. Bevorzugt werden als Emulgatoren Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren oder Mischungen hiervon verwendet. Vorzugsweise werden Emulgatoren mit Carboxylgruppen (z. B. Salze von $C_{10}$-$C_{18}$-Fettsäuren, disproportionierte Abietinsäure, Emulgatoren gemäß DE-OS 36 39 904 und DE-OS 39 13 509) eingesetzt.

In einer weiteren bevorzugten Ausführungsform können alkalische Seifen von Natrium- und Kaliumsalzen von disproportionierten und/oder dehydrogenierten und/oder hydrierten und/oder partiell hydrierten Harzen (Kolophonium) mit einem Gehalt an Dehydroabietinsäure von mindestens 30 Gew.-% und einem Gehalt von Abietinsäure von maximal 1 Gew.-% als Emulgatoren eingesetzt werden.

Es können weiterhin Salze, Säuren und Basen bei der Emulsionspolymerisation der Pfropfgrundlage B1 eingesetzt werden, z.B. Schwefelsäure, Phosphorsäure, Lösungen von Natriumhydroxid, Kaliumhydroxid, Natrium- und Kaliumsalze von Sulfaten und Phosphaten, insbesondere kann Tetranatriumpyrophosphat eingesetzt werden.

Die Polymerisationstemperatur bei der Emulsionspolymerisation des Pfropfcopolymers B beträgt im Allgemeinen 25 bis 160 °C, vorzugsweise 40 bis 90 °C. Geeignete Emulgatoren sind oben angegeben. Dabei kann nach üblicher Temperaturführung, z. B. isotherm, gearbeitet werden; vorzugsweise wird die Pfropfpolymerisation jedoch so durchgeführt, dass der Temperaturunterschied zwischen Beginn und Ende der Reaktion mindestens 10 °C, vorzugsweise mindestens 15 °C und besonders bevorzugt mindestens 20 °C beträgt.

Die Herstellung des Pfropfcopolymers B, insbesondere der Pfropfcopolymere B-I und B-II, erfolgt erfindungsgemäß mittels Emulsionspolymerisation. Dem Fachmann sind gängige Ausführungsformen der Emulsionspolymerisation im Batchbetrieb oder im kontinuierlichen Betrieb bekannt.

Insbesondere werden die Monomere der Pfropfhülle B2, d.h. die Monomere B21 und B22, separat oder als Monomer-Gemisch kontinuierlich zur Pfropfgrundlage B2, in den gegebenen Mengen und Verhältnissen zugegeben und polymerisiert. Dabei werden die Monomeren typischerweise in einer für den Fachmann bekannten Weise zur Pfropfgrundlage B1 gegeben.

Bei der Herstellung des Pfropfcopolymers B-I werden die Monomere der Pfropfhülle B2, d.h. die Monomere B21 und B22, separat oder als Monomer-Gemisch kontinuierlich zu einer Mischung der Pfropfgrundlagen B1-A und B1-B zugegeben und polymerisiert.

Bei der Herstellung des Pfropfcopolymers B-II werden die Monomere der Pfropfhülle B2, d.h. die Monomere B21 und B22, separat oder als Monomer-Gemisch kontinuierlich zu der Pfropfgrundlage B1-C zugegeben und polymerisiert.

Zur Erzeugung des Pfropfcopolymers B kann der Monomer-Zulauf während der Emulsionspolymerisation vorzugsweise derart durchgeführt werden, dass innerhalb der ersten Hälfte der gesamten Dosierzeit der Monomere 55 bis 90 Gew.-%, vorzugsweise 60 bis 80 Gew.-% und besonders bevorzugt 65 bis 75 Gew.-%, der gesamten Menge bei der Emulsionspolymerisation eingesetzten Monomeren, insbesondere der Monomere B21 und B22, dosiert werden, wobei der verbleibende Anteil der Monomer innerhalb der zweiten Hälfte der gesamten Dosierzeit dosiert wird.

In einer bevorzugten Ausführungsform kann ein Pfropfcopolymer B wie in WO 2012/022710 beschrieben eingesetzt werden. Die in WO 2012/022710 beschriebenen Pfropfcopolymere werden insbesondere durch Emulsionspolymerisation von Styrol und Acrylnitril im Gewichtsverhältnis 95 : 5 bis 50 : 50 in Gegenwart mindestens einer Pfropfgrundlage B1-E (z.B. agglomerierten Polybutadien-Latices A11, A12, A13, A51, A52, A53, A54, A61 und A62 gemäß WO 2012/022710) hergestellt, wobei die Pfropfgrundlage B1-E einen mittleren Teilchendurchmesser $d_{50}$ von 200 bis 800 nm, vorzugsweise von 225 bis 650 nm und besonders bevorzugt von 250 bis 600 nm, aufweist, erhalten. Die Pfropfgrundlage B1-E wird typischerweise durch Agglomeration feinteiliger Polybutadien-Saatlatices (z.B. feinteiligen Polybutadien-Latices B1 und B6 in WO 2012/022710) mit Essigsäureanhydrid nach WO 2012/022710 erhalten Die feinteiligen Polybutadien-Saatlatices haben typischerweise einen mittleren Teilchendurchmesser $d_{50}$ von kleiner 110 nm. Sie werden durch Emulsionspolymerisation von Butadien hergestellt, wobei bis zu 50 Gew.-% basierend auf der Gesamtmenge der Monomeren durch ein oder mehrere mit Butadien copolymerisierbare Monomeren ersetzt werden können. Beispiele hierfür sind: Isopren, Chloropren, Acrylnitril, Styrol, Alpha-Methylstyrol, $C_1$-$C_4$-Alkylstyrole, $C_1$-$C_8$-Alkylacrylate, $C_1$-$C_8$-Alkylmethacrylate.

Die Menge an einzusetzendem Essigsäureanhydrid liegt in dieser Ausführungsform bevorzugt bei 0,1 bis 5 Teilen bezogen auf 100 Teile des Feststoffs des feinteiligen Polybutadien-Saatlatex. Der feinteilige Polybutadien-Saatlatex wird bevorzugt mit Essigsäureanhydrid gemischt und, nachdem die Agglomeration vollständig erfolgt ist, mit einer basischen Lösung, bevorzugt einer Lösung von Kaliumhydroxid, stabilisiert. Weitere Details zur Agglomeration können der WO 2012/022710 entnommen werden. Emulgatoren, Initiatoren und Molekulargewichtsregler, Basen, Säuren und Salze können wie oben beschrieben und wie in WO 2012/022710 beschrieben eingesetzt werden.

Der agglomerierte Polybutadien-Saatlatex (Pfropfgrundlage B1-E) wird mit Styrol und Acrylnitril gepfropft, wobei bevorzugt 15 bis 60 Gew.-% eine Mischung aus Styrol und Acrylnitril und ggf. weiteren Monomeren in Gegenwart von 40 bis 85 Gew.-% der Pfropfgrundlage B1-E (gerechnet als Feststoff des Latex) polymerisiert werden. Bis zu 50 Gew.-% bezogen auf die Summe der in der Pfropfung eingesetzten Monomeren können durch weitere Monomere wie Alpha-Methylstryol, Methylmethacrylat, Maleinsäureanhydrid und N-Phenylmaleinimid ersetzt werden. Weitere Details zu Pfropfung der Pfropfgrundlage B1-E können der WO 2012/022710 entnommen werden.

In einer weiteren bevorzugten Ausführungsform kann ein Pfropfcopolymer B wie in WO 2014/170407 beschrieben eingesetzt werden. Die in WO 2014/170407 beschriebenen Pfropfcopolymere werden insbesondere durch Emulsionspolymerisation von Styrol und Acrylnitril im Gewichtsverhältnis 70 : 30 bis 90 : 10 in Gegenwart mindestens einer Pfropfgrundlage B1-F (z.B. agglomerierte Pfropfgrundlage B1-1, Seiten 30 und 31 von WO 2014/170407) hergestellt, wobei die Pfropfgrundlage B1-F eine bimodale Teilchengrößenverteilung mit einer Fraktion an nicht agglomerierten Latexteilchen mit einem mittleren Teilchendurchmesser $d_{50}$ im Bereich von 80 bis 120 nm und eine Fraktion agglomerierter Latexteilchen mit einem mittleren Teilchendurchmesser $d_{50}$ im Bereich von 350 bis 550 nm und einer Polydispersität U von kleiner 0,28 aufweist. Die Pfropfgrundlage B1-F wird typischerweise durch Agglomeration feinteiliger Polybutadien-Saatlatices (z.B. Pfropfgrundlage B1, Seite 27 von WO 2014/170407) mit einem agglomerierend wirkenden Acrylat-Copolymer (z.B. Copolymer C-1, Seite 28 von WO 2014/170407) erhalten. Die feinteiligen Polybutadien-Saatlatices haben typischerweise einen mittleren Teilchendurchmesser $d_{50}$ im Bereich von 80 bis 110 nm und werden durch Emulsionspolymerisation von Butadien hergestellt, wobei bis zu 10 Gew.-% basierend auf der Gesamtmenge der Monomeren durch einen Vinylaromaten, z.B. Styrol, Alpha-Methylstyrol, $C_1$-$C_4$-Alkylstyrole, ersetzt sein können. In dieser Ausführungsform wird die Pfropfgrundlage B1-F (agglomerierte Pfropfgrundlage B1 gemäß WO 2014/170407) mit Styrol und Acrylnitril gepfropft, wobei bevorzugt 15 bis 60 Gew.-% eine Mischung aus Styrol und Acrylnitril und ggf. weiteren Monomeren in Gegenwart von 40 bis 85 Gew.-% der Pfropfgrundlage B1-F (gerechnet als Feststoff des Latex) polymerisiert werden.

Einzelheiten zu dem agglomerierend wirkenden Copolymer und zu der Herstellung des Pfropfcopolymers basierend auf der Pfropfgrundlage B1-F können der WO 2014/170407 entnommen werden (insbesondere Herstellverfahren nach Seite 31 von WO 2014/170407).

Weitere Komponenten K

Den erfindungsgemäßen Formmassen können bei Herstellung, Aufarbeitung, Weiterverarbeitung und Endverformung die erforderlichen bzw. zweckmäßigen Additive zugesetzt werden, z. B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Um die Pfropfcopolymere B während der Aufarbeitung vor thermischer Schädigung zu schützen, und um die Aufarbeitung sicher und gefahrlos durchführen zu können, ist es sinnvoll Antioxidantien, z. B. ein oder mehrere phenolische Antioxidantien, sowie beliebige andere Substanzen, die die thermische Beständigkeit der Pfropfcopolymere erhöhen, in Form einer oder mehreren Emulsionen oder Dispersionen den Pfropfcopolymeren B zuzusetzen und durch Rühren zu vermischen.

Außer den genannten Polymerkomponenten A und B können die thermoplastischen Formmassen kautschukfreie nicht aus Vinylmonomeren aufgebaute Thermoplastharze als weitere Komponente K enthalten. Insbesondere handelt es sich bei diesen Thermoplastharze um Polykondensaten z. B. aromatischen Polycarbonaten, aromatischen Polyestercarbonaten, Polyestern und Polyamiden. Geeignete thermoplastische Polycarbonate und Polyestercarbonate sind bekannt und beispielsweise in DE-A 14 95 626, DE-A 22 32 877, DE-A 27 03 376, DE-A 27 14 544, DE-A 30 00 610, DE-A 38 32 396, DE-A 30 77 934, sowie insbesondere in DE-A 100 08 420 und EP-A 2 606 073 beschrieben.

In einer Ausführungsform handelt es sich bei der thermoplastischen Formmasse um einen ABS-Blend enthaltend 1 bis 90 Gew.-%, bevorzugt 10 bis 87,5 Gew.-%, besonders bevorzugt 20 bis 50 Gew.-%, bezogen auf die gesamte thermoplastische Formmasse, mindestens eines kautschukfreien nicht aus Vinylmonomeren aufgebauten Thermoplastharzes, bevorzugt ausgewählt aus Polycarbonaten und Polyamiden.

In einer bevorzugten Ausführungsform werden die oben beschriebenen Pfropfcopolymere B-I und B-II nach der getrennten Herstellung gemischt und gemeinsam gefällt (co-gefällt) (Schritt a)).

Daneben ist es auch möglich die oben beschriebenen Pfropfcopolymere B-I und B-II nach der getrennten Herstellung getrennt aufzuarbeiten, d.h. die erfindungsgemäßen Schritte a) bis c) (Fällen der Pfropfcopolymere, Entwässern der wasserfeuchten Pfropfcopolymere, bevorzugt durch Filtration oder Zentrifugation und das Trocknen, bevorzugt unter Verwendung eines Fließbetttrockners und/oder eines Stromtrockners) getrennt durchzuführen und die aufgearbeiteten Pfropfcopolymere B-I und B-II in Schritt d) mit dem thermoplastischen Copolymer A und optional weiteren Komponenten K zu vermischen.

Schritt a)

Der erfindungsgemäße Schritt a) umfasst das Fällen des mindestens einen Pfropfcopolymers B nach der Emulsionspolymerisation durch Zugabe einer Fällungslösung enthaltend mindestens ein Salz und mindestens eine anorganische Säure.

Der erfindungsgemäße Schritt a) umfasst bevorzugt das Fällen des mindestens einen Pfropfcopolymers B nach der Emulsionspolymerisation durch Zugabe einer Fällungslösung enthaltend mindestens ein Salz und mindestens eine anorganische Säure.

In einer bevorzugten Ausführungsform umfasst der erfindungsgemäße Schritt a), dass die Pfropfcopolymere B-I und B-II vermischt werden und die Mischung der Pfropfcopolymere durch Zugabe der Fällungslösung enthaltend mindestens ein Salz und mindestens eine anorganische Säure gefällt wird. Hierbei werden insbesondere die Pfropfcopolymere B-I und B-II jeweils in ihrer Latex-Form nach der Emulsionspolymerisation homogen vermischt. Das erhaltene Latexgemisch der Pfropfcopolymere B-I und B-II wird wie in den Schritten b) bis d) beschrieben weiter aufgearbeitet.

Als Fällungslösung zum Fällen des mindestens einen Pfropfcopolymers B nach der Emulsionspolymerisation werden wässrige Salzlösungen, beispielsweise wässrige Lösungen von Magnesiumsulfat, Kieserit, Pentahydrit, Hexahydrit, Epsomit (Bittersalz), Calciumchlorid, Natriumchlorid oder Mischungen hiervon und eine wässrige Lösung mindestens einer anorganischen Säure eingesetzt, insbesondere Schwefelsäure, insbesondere eine Schwefelsäure mit einer Konzentration im Bereich von 1 bis 20 Gew.-%, bevorzugt 2 bis 20 Gew.-%. Bevorzugt ist es auch möglich Mischung von wässrigen Salzlösungen und Säuren (z. B. Schwefelsäure) als Fällungslösung einzusetzen.

Bevorzugte Salze sind hierbei Magnesiumsulfat, Kieserit ($Mg[SO_4] \cdot H_2O$), Pentahydrit ($Mg[SO_4] \cdot 5H_2O$), Hexahydrit ($Mg[SO_4] \cdot 6H_2O$), und Epsomit ($Mg[SO_4] \cdot 7H_2O$, Bittersalz), bevorzugte Säuren sind Schwefelsäure und Mischungen hiervon. Das Fällen des mindestens einen Pfropfcopolymers B in Schritt a) erfolgt durch Einwirkung einer Kombination von wässrigen Salz- und Säurelösungen.

Ganz besonders bevorzugt erfolgt das Fällen durch Einwirken einer Kombination einer wässrigen Salzlösung, ausgewählt aus wässrigen Lösungen von Magnesiumsulfat, Kieserit, Pentahydrit, Hexahydrit und Epsomit (Bittersalz), und Schwefelsäure.

Typischerweise weisen die Fällungslösungen eine Konzentration an Salz und anorganischer Säure im Bereich von 2 bis 20 Gew.-%, bezogen auf die Fällungslösung, auf.

Das Fällen des mindestens einen Pfropfcopolymers B in Schritt a) kann einstufig oder mehrstufig unter Zugabe mehrerer Fällungslösungen erfolgen, wobei die Fällungslösungen gleich oder verschieden sein können.

Das Fällen des mindestens einen Pfropfcopolymers B kann bevorzugt durch kontinuierliche oder absatzweise Zugabe der Fällungslösung durchgeführt werden. Im Falle der kontinuierlichen Zugabe findet die Fällung in mindestens einem, vorzugsweise in mindestens zwei, besonders bevorzugt in mindestens drei, und ganz besonders bevorzugt in mindestens vier, kontinuierlich betriebenen Rührbehältern, beispielsweise kontinuierlichen Rührkesseln, statt.

In einer besonders bevorzugten Ausführungsform werden eine wässrige Magnesiumsulfat-Lösung und eine Schwefelsäure (5 bis 20 Gew.-%) kontinuierlich und gleichzeitig in einer oder mehrerer Stufen zu dem Pfropfcopolymer B (Latex) dosiert.

Das Fällen kann in einem Temperaturbereich von 20 bis 150 °C; bevorzugt von 40 bis 100 °C, besonders bevorzugt von 45 bis 99 °C, durchgeführt werden.

Schritt b)

Der erfindungsgemäße Schritt b) umfasst das mechanische Entwässern des gefällten Pfropfcopolymers B, bevorzugt mittels Zentrifugation und/oder Filtration, wobei ein Pfropfcopolymer B mit einem Wassergehalt von kleiner oder gleich 50 Gew.-% erhalten wird.

Der Wassergehalt (oder auch als Restfeuchte bezeichnet) gibt den Anteil an Wasser in Gewichtsprozent, bezogen auf das feuchte Pfropfcopolymer B, an. Insbesondere wird der Wassergehalt mit Hilfe geeigneter Analysegeräte (z.B. Trockenwaagen) bestimmt, wobei die Probe so lange getrocknet wird, bis eine Gewichtskonstanz der Probe über einen bestimmten Zeitraum erreicht ist. Beispielsweise kann der Wassergehalt des Pfropfcopolymers B in einem Halogen Moisture Analyzer HR73 von Mettler-Toledo, bei 180 °C bestimmt werden, bis eine Gewichtskonstanz für 30 Sekunden erreicht wird.

Bevorzugt erfolgt das mechanische Entwässern des gefällten Pfropfcopolymers B mittels Zentrifugation. Typischerweise wird das gefällte Pfropfcopolymer mit einer Zentripedalbeschleunigung von 200 bis 1000 g, bevorzugt 300 bis 800 g über einen Zeitraum von 1 Sekunde bis 5 Minuten, bevorzugt 1 bis 120 Sekunden, zentrifugiert.

Bevorzugt wird in Schritt b) oder in einem nachgeschalteten Waschschritt wie unten beschrieben, ein Pfropfcopolymer B mit einem Wassergehalt im Bereich von 10 bis 50 Gew.-%, bevorzugt von 20 bis 40 Gew.-%, insbesondere bevorzugt von 25 bis 35 Gew.-% erhalten. Weiterhin bevorzugt wird ein Pfropfcopolymer B mit einem Wassergehalt im Bereich von 10 bis 30 Gew.-%, bevorzugt von 10 bis 25 Gew.-%, insbesondere bevorzugt von 15 bis 20 Gew.-% erhalten.

In einer weiteren Ausführungsform schließt sich nach dem mechanischen Entwässern des Pfropfcopolymers B ein Waschschritt an, wobei das entwässerte Pfropfcopolymer B vorzugsweise mit Wasser oder einer Mischung aus Wasser und einem polaren, mit Wasser mischbaren organischen Lösungsmittel behandelt wird. Bevorzugt wird das Wasser oder die Mischung nach der Behandlung durch Filtration oder Zentrifugation abgetrennt. Bevorzugt entsteht dabei ein Pfropfcopolymer B mit einem Wassergehalt von kleiner oder gleich 50 Gew.-%. Bevorzugt weist das Pfropfcopolymer B nach dem optionalen Waschschritt einen oben angegebenen Wassergehalt auf.

Schritt c)

Der erfindungsgemäße Schritt c) umfasst das Trocknen des entwässerten Pfropfcopolymers B mit einem Wassergehalt von kleiner oder gleich 50 Gew.-% unter Verwendung eines Trocknungsgases, wobei das Pfropfcopolymer B in dem Trocknungsgas bewegt wird und das Trocknungsgas eine Temperatur im Bereich von 50 bis 160 °C, bevorzugt von 55 bis 155 °C, besonders bevorzugt von 60 bis 150 °C, aufweist.

Insbesondere wird das Pfropfcopolymer B zusammen mit dem strömenden Trocknungsgas bewegt, insbesondere wird das Pfropfcopolymer B von dem strömenden Trocknungsgas mitgerissen.

Bevorzugt wird als Trocknungsgas Luft, Stickstoff oder beliebige Mischungen hiervon verwendet.

In einer bevorzugten Ausführungsform erfolgt das Trocknen des entwässerten Pfropfcopolymers B in Schritt c) unter Verwendung eines Fließbetttrockners (Wirbelschichttrockner) und/oder einem Stromtrockners (Flashtrockner). Bevorzugt erfolgt das Trocknen unter Verwendung eines Fließbetttrockners oder unter Verwendung einer Kombination eines Fließbetttrockners und eines Stromtrockners. Insbesondere kann der Fließbetttrockners einen oder mehrere Wärmetauscher aufweisen.

Fließbetttrockner (Wirbelschichttrockner) und Stromtrockner (Flashtrockner) sind dem Fachmann bekannt. Insbesondere handelt es sich um Trocknungsvorrichtungen für partikelförmige, rieselfähige Materialien, wie sie in Krischer/Kröll, Trocknungstechnik, Zweiter Band, Trockner und Trocknungsverfahren (Springer-Verlag, 1959) beschrieben werden. Fließbetttrockner, auch Wirbelschichttrockner genannt, werden zum Beispiel in dem oben genannten Dokument auf den Seiten 275 bis 282 beschrieben. Stromtrockner oder auch Flashtrockner genannten werden in dem oben genannten Dokument beispielsweise auf den Seiten 282 folgende beschrieben.

Typischerweise wird in Fließbetttrocknern das zu trocknende Material (d.h. das entwässerte Pfropfcopolymers B mit einem Wassergehalt von kleiner oder gleich 50 Gew.-%) von unten (d.h. entgegen der Richtung der Schwerkraft) durch ein Gas, insbesondere Warmluft oder heiße Gase, bevorzugt ein Trocknungsgas ausgewählt aus Luft und/oder Stickstoff mit einer Temperatur im Bereich von 50 bis 160 °C, durchströmt und angehoben, aber nicht mitgetragen. Hierbei entsteht in der Regel eine Schicht, in der sich die Partikel des zu trocknenden Materials ständig aufwärts und abwärts bewegen und wie eine brodelnde Flüssigkeit erscheinen. Man spricht oftmals von einem Fließbett, auch Schwebebett oder Wirbelbett. Typischerweise müssen die Strömungsbedingungen des jeweiligen Systems so eingestellt werden, dass die gewünschte Wirbelschicht entsteht. In der Regel umfassen Fließbetttrockner eine Schwebekammer, in der das zu trocknende Material beispielsweise auf einem Siebboden liegt, durch den das Trocknungsgas von unten durch das Material strömt, mindestens eine Eingabevorrichtung für das zu trocknende (feuchte) Material und mindestens eine Abscheide- und Entnahmevorrichtung (Abscheider) für das getrocknete Material. Beispielsweise können die getrockneten Partikel, die auf Grund ihres abnehmenden Gewichts nach oben aus der Wirbelschicht ausgetragen werden, durch eine entsprechende Vorrichtung (z.B. ein Zyklon) aus dem Gasstrom abgetrennt werden.

Insbesondere beträgt die mittlere Verweilzeit des Pfropfcopolymers B im Fließbetttrockner 1 bis 60 min, bevorzugt 5 bis 50 min, besonders bevorzugt 10 bis 40 min.

In einer bevorzugten Ausführungsform erfolgt das Trocknen des entwässerten Pfropfcopolymers B in Schritt c) unter Verwendung eines Fließbetttrockners, welcher einen oder mehrere in das Fließbett integrierte Wärmetauscher aufweist. Durch den Einsatz von Wärmetauschern kann insbesondere - zusätzlich zu der Trocknungsenergie des heißen Trocknungsgases - Trocknungsenergie in das Fließbett eingebracht werden. Gängige Ausführungsformen von Wärmetauschern, wie beispielsweise Platten-, Rippenrohr-, Rohr-, und Spiral-Wärmetauscher, sind dem Fachmann bekannt und in Standardwerken beschrieben. Beispielsweise können Fließbetttrockner eingesetzt werden, die in D. Gehrmann, et al., Trocknungstechnik in der Lebensmittelindustrie (Behr's Verlag GmbH & Co.KG, 1. Auflage 2009, Abschnitt 2.5.3 Statische Wirbelschichttrockner, Seite 143-145) beschrieben sind. Die Wärmetauscher werden bevorzugt mit Temperaturen im Bereich von 50 bis 100 °C, bevorzugt 55 bis 90 °C, besonders bevorzugt 60 bis 85 °C betrieben. Insbesondere beträgt die Einlauftemperatur des Wärmeaustauschmediums (beispielsweise Wasser) 50 bis 100 °C, bevorzugt 55 bis 90 °C, besonders bevorzugt 60 bis 85 °C.

Typischerweise wird in Stromtrocknern das zu trocknende Material (d.h. das entwässerte Pfropfcopolymers B mit einem Wassergehalt von kleiner oder gleich 50 Gew.-%) durch strömende Gase, insbesondere Warmluft oder heiße Gase, bevorzugt ein Trocknungsgas ausgewählt aus Luft und/oder Stickstoff mit einer Temperatur im Bereich von 50 bis 160 °C, mitgerissen und dabei getrocknet. Hierbei überträgt das strömende Gas als Trocknungsgas Energie auf das zu trocknende Material und führt den entstehenden Wasserdampf ab. Typischerweise sind Stromtrockner als horizontales oder vertikales Rohr ausgebildet, wobei typischerweise mindestens eine Eingabevorrichtung für das zu trocknende (feuchte) Material und mindestens eine Abscheide- und Entnahmevorrichtung (Abscheider) für das getrocknete Material umfasst sind.

Die mittlere Verweilzeit des Pfropfcopolymers B im Stromtrockner beträgt typischerweise 1 bis 300 Sekunden, bevorzugt 1 bis 120 Sekunden, besonders bevorzugt 5 bis 60 Sekunden.

In Schritt c) können ein oder mehrere Fließbetttrockner (Wirbelschichttrockner) und/oder ein oder mehrere Stromtrockner absatzweise oder kontinuierlich betrieben werden.

Die Produkttemperatur im Trocknungsschritt c), d.h. die Temperatur des mindestens einen Pfropfcopolymers B in Schritt c), beträgt kleiner 100 °C, vorzugsweise kleiner 95 °C und ganz bevorzugt kleiner 90 °C. Bevorzugt liegt die Produkttemperatur im Bereich von 30 bis 100 °C, bevorzugt 40 bis 95 °C, besonders bevorzugt 60 bis 90 °C. Dies meint insbesondere, dass die Produkttemperatur während des gesamten Trocknungsschritts in einem oben genannten Bereich liegt.

Die mittlere Verweilzeit des Pfropfcopolymers B im Fließbetttrockner und/oder Stromtrockner beträgt typischerweise 1 Sekunde bis 90 min, bevorzugt 1 Sekunde bis 60 min, bevorzugt 5 Sekunden bis 40 min. Grundsätzlich ist es vorteilhaft beim Stromtrockner kürzere Verweilzeiten und höhere Temperaturen einzustellen im Vergleich zum Fließbetttrockner.

Durch den erfindungsgemäßen Trocknungsschritt ist es insbesondere möglich eine besonders schnelle und gleichmäßige Trocknung zu erreichen, was insbesondere zu kleinen Salzeinlagerungen, beispielsweise in Form von Salzkristallen, führt, welche wenige mit bloßem Auge sichtbare Oberflächenstörungen hervorrufen. Der erfindungsgemäße Trocknungsschritt sollte daher insbesondere einen schnellen und effektiven Wärmeübergang zwischen dem Trocknungsgas und dem zu trocknenden Pfropfcopolymer B gewährleisten, wobei aber andererseits hohe Temperaturen des zu trocknenden Pfropfcopolymer B selbst vermieden werden.

Bevorzugt wird das Trocknen in Schritt c) mittels eines Trocknungsgases ausgewählt aus Luft und/oder Stickstoff durchgeführt,

wobei das Trocknen unter Verwendung eines Fließbetttrockners durchgeführt wird und das Trocknungsgas eine Temperatur im Bereich von 50 bis 100 °C, bevorzugt 55 bis 90 °C, besonders bevorzugt 60 bis 85 °C, aufweist;

oder wobei das Trocknen unter Verwendung eines Stromtrockners durchgeführt wird und das Trocknungsgas eine Temperatur im Bereich von 100 bis 160 °C, bevorzugt 110 bis 155 °C, besonders bevorzugt 130 bis 150 °C, aufweist.

Weiterhin bevorzugt wird das Trocknen in Schritt c) mittels eines Trocknungsgases ausgewählt aus Luft und/oder Stickstoff durchgeführt,
wobei das Trocknen unter Verwendung eines Fließbetttrockners, welcher einen oder mehrere in das Fließbett integrierte Wärmetauscher aufweist, durchgeführt wird; das Trocknungsgas eine Temperatur im Bereich von 50 bis 100 °C, bevorzugt 55 bis 90 °C, besonders bevorzugt 60 bis 85 °C, aufweist, und der Wärmetauscher mit einer Temperaturen im Bereich von 50 bis 100 °C, bevorzugt 55 bis 90 °C, besonders bevorzugt 60 bis 85 °C betrieben wird.

Insbesondere bevorzugt wird das Trocknen in Schritt c) mittels eines Trocknungsgases ausgewählt aus Luft und/oder Stickstoff durchgeführt,

wobei das Trocknen unter Verwendung eines Fließbetttrockners, bevorzugt eines Fließbetttrockners, welcher einen oder mehrere ins Fließbett integrierte Wärmetauscher aufweist, durchgeführt wird, das Trocknungsgas eine Temperatur im Bereich von 50 bis 100 °C aufweist und die mittlere Verweilzeit des Pfropfcopolymers B im Fließbetttrockner 1 bis 90 min, bevorzugt 10 bis 85 min, insbesondere bevorzugt 15 bis 80 min, weiterhin bevorzugt 1 bis 60 min, weiterhin bevorzugt 5 bis 50 min, besonders bevorzugt 10 bis 40 min beträgt;

oder wobei das Trocknen unter Verwendung eines Stromtrockners durchgeführt wird, das Trocknungsgas eine Temperatur im Bereich von 100 bis 160 °C aufweist und die mittlere Verweilzeit des Pfropfcopolymers B im Stromtrockner 1 bis 300 Sekunden, bevorzugt 1 bis 120 Sekunden, besonders bevorzugt 5 bis 60 Sekunden beträgt.

In einer bevorzugten Ausführungsform der Erfindung wird die oben beschriebene Trocknung für weitere 10 bis 40 min, bevorzugt 15 bis 30 min fortgeführt, ab dem Zeitpunkt, an dem ein Wassergehalt von 2 Gew.-%, bevorzugt von 1 Gew.-%, insbesondere bevorzugt von 0,8 Gew.-%, erreicht wird.

In einer bevorzugten Ausführungsform weist das getrocknete Pfropfcopolymer B erhalten in Schritt c) einen Wassergehalt im Bereich von 0,01 bis 1 Gew.-%, bevorzugt 0,05 bis 0,8 Gew.-%, insbesondere bevorzugt 0,1 bis 0,5 Gew.-%, besonderes bevorzugt 0,2 bis 0,4 Gew.-%, auf.

Durch den erfindungsgemäßen Trocknungsschritt ist es insbesondere möglich den Gesamtgehalt an Restmonomeren, insbesondere die Summe von Styrol und 4-Vinylcyclohexen, im Pfropfcopolymer B auf einen Wert kleiner oder gleich 2.000 ppm, insbesondere kleiner oder gleich 1.000 ppm, bevorzugt kleiner oder gleich 500 ppm, jeweils bezogen auf das trockene Pfropfcopolymer B, zu vermindern.

Bevorzugt wird der Gehalt an Styrol im Pfropfcopolymer B auf einen Wert kleiner 1.000 ppm, insbesondere kleiner 800 ppm, bevorzugt kleiner 500 ppm, jeweils bezogen auf das trockene Pfropfcopolymer B, vermindert. Bevorzugt wird der Gehalt an Acrylnitril im Pfropfcopolymer B auf einen Wert kleiner 10 ppm, insbesondere kleiner oder gleich 5 ppm, jeweils bezogen auf das trockene Pfropfcopolymer B, vermindert. Bevorzugt wird der Gehalt an 4-Vinylcyclohexen im Pfropfcopolymer B auf einen Wert kleiner oder gleich 100 ppm, bevorzugt kleiner oder gleich 50 ppm, insbesondere kleiner oder gleich 10 ppm, jeweils bezogen auf das trockene Pfropfcopolymer B, vermindert.

Im Sinne der vorliegenden Erfindung bezieht sich die Maßeinheit ppm auf mg/kg.

Unter Restmonomeren sind nicht umgesetzte Monomere und deren Umwandlungsprodukte sowie Oligomere zu verstehen. Insbesondere umfasst der Gesamtgehalt an Restmonomeren den Gehalt an Styrol, Acrylnitril, Butadien und 4-Vinylcyclohexen (VCH), bevorzugt den Gehalt an Acrylnitril, Styrol und 4-Vinylcyclohexen, besonders bevorzugt den Gehalt an Styrol und 4-Vinylcyclohexen, im Pfropfcopolymer B.

In einer bevorzugten Ausführungsform weist das getrocknete Pfropfcopolymer B erhalten in Schritt c) einen Wassergehalt im Bereich von 0,05 bis 0,8 Gew.-%, bevorzugt 0,1 bis 0,5 Gew.-%, besonderes bevorzugt 0,1 bis 0,3 Gew.-%, und einen Gesamtgehalt an Restmonomeren von kleiner oder gleich 2.000 ppm, bevorzugt von kleiner oder gleich 1.000 ppm, insbesondere im Bereich von 10 bis 2.000 ppm, bevorzugt von 20 bis 1.000 ppm, jeweils bezogen auf das trockene Pfropfcopolymer B, auf.

Schritt d)

Der erfindungsgemäße Schritt d) umfasst das Vermischen des thermoplastischen Copolymers A, des getrockneten Pfropfcopolymers B aus Schritt c) und optional der weiteren Komponente(n) K.

Die Verfahren und Vorrichtungen zur Durchführung des Schritts d) sind dem Fachmann im Wesentlichen bekannt. Typischerweise umfasst Schritt d) das Schmelzecompoundieren und/oder das Schmelzextrudieren und wird bevorzugt in Innenknetern, Extrudern und/oder Doppelwellenschnecken durchgeführt.

Bevorzugt erfolgt das Vermischen in Schritt d) bei Temperaturen von 200 bis 300 °C.

Das Vermischen des thermoplastischen Copolymers A, des mindestens einen getrockneten Pfropfcopolymers B aus Schritt c) und optional weiteren Komponenten K kann in bekannter Weise sowohl sukzessive als auch simultan erfolgen. Es ist zudem möglich, dass zunächst einige Komponenten bei Temperaturen von 15 bis 40 °C, insbesondere bei Raumtemperatur (etwa 20 °C) vermischt werden und später die Temperatur auf 200 bis 300 °C optional unter Zugabe weiterer Komponenten erhöht wird.

Gegenstand der Erfindung ist zudem die Verwendung eines Fließbetttrockners (Wirbelschicht-Trockner), bevorzugt eines Fließbetttrockners, welcher einen oder mehrere ins Fließbett integrierte Wärmetauscher aufweist, und/oder eines Stromtrockners (Flashtrockner) bei der Herstellung einer thermoplastischen Formmasse wie oben beschrieben zur Trocknung des Pfropfcopolymers B, welches einen Wassergehalt von kleiner oder gleich 50 Gew.-% aufweist, nach der Emulsionspolymerisation, Fällung und mechanischen Entwässerung des Pfropfcopolymers B zur Verbesserung der Oberflächenqualität der thermoplastischen Formmasse. Insbesondere handelt es sich um eine thermoplastische ABS-Formmasse.

Die oben beschriebenen Ausführungsformen, insbesondere die Ausführungsformen betreffend die thermoplastische Formmasse und deren Komponenten sowie die Verfahrensschritte a) bis d), gelten in entsprechender Weise für die erfindungsgemäße Verwendung.

In einer bevorzugten Ausführungsform betrifft die Erfindung die Verwendung wie oben beschrieben, wobei das Trocknen des Pfropfcopolymers B in einem Fließbetttrockner und/oder einem Stromtrockner mittels eines Trocknungsgases ausgewählt aus Luft und/oder Stickstoff durchgeführt wird, und das Trocknungsgas eine Temperatur im Bereich von 50 bis 160 °C, bevorzugt 55 bis 155 °C, besonders bevorzugt 60 bis 150 °C, aufweist.

Insbesondere betrifft die vorliegende Erfindung die Verwendung wie oben beschrieben, wobei die Verbesserung der Oberflächenqualität der thermoplastischen Formmasse eine Erhöhung der Oberflächenhomogenität der thermoplastischen Formmasse bzw. des daraus hergestellten Formteils umfasst. Erhöhung der Oberflächenhomogenität meint insbesondere die Erhöhung von Glanz und Glätte der Oberfläche und/oder die Verminderung von Oberflächenstörungen. Als Oberflächenstörungen können insbesondere Flecken (beispielsweise bedingt durch Salzeinlagerungen), Risse und Vertiefungen (Kavitäten), genannt werden.

Insbesondere betrifft die vorliegenden Erfindung die Verwendung wie oben beschrieben, wobei die Verbesserung der Oberflächenqualität der thermoplastischen Formmasse eine Verminderung der Oberflächenstörungen nach einer Lagerung der Formmasse unter feucht-warmen Umgebungsbedingungen umfasst.

"Feucht-warme" Umgebungsbedingungen meint insbesondere Bedingungen die eine Temperatur und eine Luftfeuchte umfassen, welche über den üblichen Werten von 15 bis 25 °C und einer relativen Luftfeuchte von 30 bis 60 % liegen. Zudem können feucht-warme Umgebungsbedingungen insbesondere den direkten Kontakt der Oberfläche mit flüssigem Wasser umfassen. Insbesondere umfasst der Ausdruck feucht-warme Umgebungsbedingungen im Sinne der Erfindung eine Temperatur im Bereich von 30 bis 100 °C, bevorzugt 40 bis 90 °C, besonders bevorzugt 50 bis 80 °C und eine relative Luftfeuchtigkeit im Bereich von 65 bis 100 %, bevorzugt 80 bis 100 % und/oder die direkte Einwirkung von flüssigem Wasser bei einer Temperatur im Bereich von 30 bis 100 °C, bevorzugt 40 bis 90 °C, besonders bevorzugt 50 bis 80 °C, auf die Oberfläche der Formmasse bzw. des daraus hergestellten Formteils. Typischerweise beziehen sich die angegebenen Bedingungen auf Normaldruck von 1,013 bar, typischerweise auf einen Bereich von 0,9 bis 1,1 bar.

Üblicherweise gibt die relative Luftfeuchtigkeit $f_R$ das prozentuale Verhältnis der absoluten Luftfeuchte f (Masse des Wasserdampfs in einem bestimmten Volumen, z. B. in g/m$^3$) zu der maximalen Luftfeuchte $f_{max}$, bei einer gegebener Temperatur an. Die maximale Luftfeuchte $f_{max}$ beschreibt die maximal mögliche Masse an Wasserdampf in einem bestimmten Luftvolumen bei einer gegebenen Temperatur (Sättigung). Die relative Luftfeuchtigkeit kann nach der folgenden Formel bestimmt werden

$$f_R = (f/f_{max})*100 \, \%$$

und nimmt somit Werte zwischen 0 und 100 % an. Bei einer relativen Luftfeuchtigkeit über 100 % kommt es daher in der Regel zu einer Kondensation von Wasserdampf, beispielsweise in Form von Nebel.

In diesem Sinne bezieht sich die Erfindung bevorzugt auf die oben beschriebene Verwendung eines Fließbetttrockners, bevorzugt eines Fließbetttrockners mit einem oder mehreren in das Fließbett integrierten Wärmetauschern, und/oder eines Stromtrockners bei der Herstellung einer thermoplastischen Formmasse zur Verbesserung der Oberflächenqualität, wobei die Verbesserung der Oberflächenqualität eine Verminderung der Oberflächenstörungen nach einer Lagerung der Formmasse bzw. der daraus hergestellten Formteile bei einer Temperatur im Bereich von 30 bis 100 °C und einer relativen Luftfeuchtigkeit im Bereich von 65 bis 100 % und/oder der direkten Einwirkung von flüssigem Wasser bei einer Temperatur im Bereich von 30 bis 100 °C auf die Oberfläche der Formmasse (feucht-warme Umgebungsbedingungen), umfasst.

Verbesserung der Oberflächenqualität im Sinne der Erfindung meint insbesondere, dass nach einer Lagerung von mindestens einer Stunde, bevorzugt nach einer Lagerung über einen Zeitraum von 2 bis 48 h, bevorzugt von 5 bis 24 h, unter feucht-warmen Umgebungsbedingungen wie oben beschrieben wenige oder keine Oberflächenstörungen, insbesondere Flecken und/oder Vertiefungen bedingt durch Salzeinlagerungen, mit bloßem Auge zu beobachten sind. Insbesondere meint Verbesserung der Oberflächenqualität, dass nach einer Lagerung unter feucht-warmen Bedingungen auf einer Fläche von 150 cm$^2$ weniger als 15, bevorzugt weniger als 10, besonders bevorzugt weniger als 6, Oberflächenstörungen, insbesondere Flecken und/oder Vertiefungen, mit bloßem Auge zu beobachten sind.

In einer bevorzugten Ausführungsform umfasst die Verbesserung der Oberflächenqualität der thermoplastischen Formmasse die Vermeidung oder Verhinderung von Salzeinlagerungen mit einer Größe von mehr als 0,3 mm, bevorzugt von mehr als 0,2 mmm und insbesondere bevorzugt von mehr als 0,1 mm. Insbesondere kann durch die erfindungsgemäße Verwendung die Bildung von großen Salzeinlagerungen, welche mit dem bloßen menschlichen Auge sichtbar sind, in den thermoplastischen Formmassen bzw. den daraus hergestellten Formteilen, vermieden oder vermindert werden, insbesondere in dem oben beschriebenen Ausmaß.

Als Salzeinlagerungen, die mit dem bloßen menschlichen Auge nicht sichtbar sind, werden solche verstanden, die hinsichtlich Größe und Dichte gemäß DIN EN ISO 4628-2 zu einer Bewertung von "1 S1" führen. Oberflächen ohne Salzeinlagerungen, welche mit dem bloßen menschlichen Auge sichtbar sind, werden typischerweise gemäß DIN EN ISO 4628-2 mit der Bewertung "0" bewertet.

Bevorzugt umfasst die Verbesserung der Oberflächenqualität, dass in der thermoplastischen Formmasse bzw. in den daraus hergestellten Formteilen mindestens 80 %, bevorzugt mindestens 90 %, insbesondere mindestens 99 %, bezogen auf die gesamte Anzahl der Salzeinlagerungen, welche mit dem bloßen menschlichen Auge sichtbar sind, der Salzeinlagerungen eine Größe kleiner 0,3 mm, bevorzugt kleiner als 0,2 mm, insbesondere bevorzugt kleiner als 0,1 mm, ganz besonders bevorzugt kleiner 0,01 mm aufweisen. Bevorzugt kann als Größe der Durchmesser der Salzeinlagerung bestimmt werden. Bevorzugt umfasst die Verbesserung der Oberflächenqualität der thermoplastischen Formmasse die Vermeidung oder Verhinderung von Salzeinlagerungen wie oben beschrieben nach einer Lagerung unter feucht-warmen Bedingungen wie oben definiert.

Bevorzugt enthalten die Salzeinlagerungen Salze (oder bestehen im Wesentlichen daraus), welche herstellungsbedingt in der Formmasse enthalten sind, insbesondere Salze, welche zur Fällung des mindestens einen Pfropfcopolymers B eingesetzt werden. Bevorzugt enthalten die Salzeinlagerungen somit Salze der oben genannten Fällungsmittel, beispielsweise Magnesiumsulfat, Kieserit, Pentahydrat, Hexahydrit, Epsomit, Calciumchlorid, Natriumchlorid oder Mischungen hiervon. Zudem können in den Einlagerungen auch Salze abgeleitet von den eingesetzten Säuren, beispielsweise Sulfate, Acetate und Chloride, enthalten sein. Weiterhin können die Salzeinlagerungen auch Salze abgeleitet von anderen bei der Herstellung verwendeten Additiven, z.B. Emulgatoren, enthalten. Bevorzugt enthalten die Salzeinlagerungen Magnesiumsulfat. Insbesondere bevorzugt enthalten die Salzeinlagerungen Magnesiumsulfat als wesentlichen Bestandteil, beispielsweise zu mehr als 80 Gew.-% bezogen auf das Gewicht der Salzeinlagerungen.

Bevorzugt betrifft die Erfindung die oben genannte Verwendung, wobei es sich bei dem Pfropfcopolymer B um die Mischung der Pfropfcopolymeren B-I und B-II handelt, insbesondere um eine Mischung umfassend die co-gefällten Pfropfcopolymere B-I und B-II.

Gegenstand der Erfindung ist zudem die Verwendung eines Fließbetttrockners (Wirbelschicht-Trockner), bevorzugt eines Fließbetttrockners, welcher einen oder mehrere ins Fließbett integrierte Wärmetauscher aufweist, und/oder eines Stromtrockners (Flashtrockner) bei der Herstellung einer thermoplastischen Formmasse, wie oben beschrieben,

zur Trocknung des Pfropfcopolymers B, welches einen Wassergehalt von kleiner oder gleich 50 Gew.-% aufweist, nach der Emulsionspolymerisation, Fällung und mechanischen Entwässerung des Pfropfcopolymers B zur Verminderung des Gesamtgehaltes an Restmonomeren, bevorzugt auf einen Wert unter 2.000 ppm, insbesondere unter 1.000 ppm, jeweils bezogen auf das trockene Pfropfcopolymer B. Bevorzugt betrifft die Verwendung die Trocknung des Pfropfcopolymers B auf einen Wassergehalt unter 1 Gew.-%, bevorzugt unter 0,5 Gew.-%.

Gegenstand der Erfindung sind auch thermoplastische Formmassen erhältlich durch das erfindungsgemäße Verfahren, sowie die daraus hergestellten Formteile, wobei die thermoplastische Formmasse Salzeinlagerungen enthält und wobei mindestens 80 %, bevorzugt mindestens 90 %, insbesondere mindestens 99 % (bezogen auf die gesamte Anzahl der Salzeinlagerungen), der Salzeinlagerungen eine Größe kleiner 0,3 mm, bevorzugt kleiner als 0,2 mm, insbesondere bevorzugt kleiner als 0,1 mm, ganz besonders bevorzugt kleiner 0,01 mm aufweisen. Bevorzugt wird als Größe der Durchmesser der Salzeinlagerung angegeben oder die Länge einer anderen charakteristischen Dimension.

Die thermoplastische Formmasse enthält erfindungsgemäß 5 bis 95 Gew.-%, bevorzugt 40 bis 80 Gew.-%, des mindestens einen thermoplastischen Copolymers A, 5 bis 95 Gew.-%, bevorzugt 20 bis 60 Gew.-%, des mindestens einen Pfropfcopolymers B und optional 0 bis 90 Gew.-%, bevorzugt 0 bis 40 Gew.-%, besonders bevorzugt 0 bis 5 Gew.-%, mindestens einer weiteren Komponente K. Bevorzugt enthält die Formmasse 0 bis 5 Gew.-%, mindestens einer weiterer Komponenten K, wobei die weitere Komponente ausgewählt ist aus üblichen Additiven und Zusatzstoffen. Weiterhin bevorzugt handelt es sich bei der thermoplastischen Formmasse um einen ABS-Blend enthaltend 10 bis 90 Gew.-%, bevorzugt 10 bis 87,5 Gew.-%, besonders bevorzugt 10 bis 50 Gew.-%, bezogen auf die gesamte thermoplastische Formmasse, mindestens eines kautschukfreies nicht aus Vinylmonomeren aufgebautes Thermoplastharz, bevorzugt ausgewählt aus Polycarbonaten und Polyamiden als weitere Komponente K.

Die erfindungsgemäßen Formmassen können zur Herstellung von Formteilen jeder Art verwendet werden. Diese können durch Spritzguss, Extrusion und Blasformverfahren hergestellt werden. Eine weitere Form der Verarbeitung ist die Herstellung von Formteilen durch Tiefziehen aus zuvor hergestellten Platten oder Folien und das Verfahren der Folienhinterspritzung. Beispiele für solche Formteile sind Folien, Profile, Gehäuseteile jeder Art, z. B. für Haushaltsgeräte wie Saftpressen, Kaffeemaschinen, Mixer; für Büromaschinen wie Monitore, Drucker, Kopierer; Automobilaußen- und -Innenteilen; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise zur Herstellung von folgenden Formteilen verwendet werden:

Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und - Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Vorrichtung zur Haltung oder Versorgung von Kleintieren, Formteile für Sanitär- und Badausrüstungen, Abdeckgitter für Lüfter-Öffnungen, Formteile für Garten- und Gerätehäuser, Gehäuse für Gartengeräte.

Die oben beschriebenen Ausführungsformen betreffend die thermoplastische Formmasse, insbesondere das thermoplastische Copolymer A und das Pfropfcopolymer B, und betreffend die Verfahrensschritte a) bis d) gelten in entsprechender Weise für die erfindungsgemäße Formmasse und daraus hergestellter Formteile.

Beschreibung der Figuren:

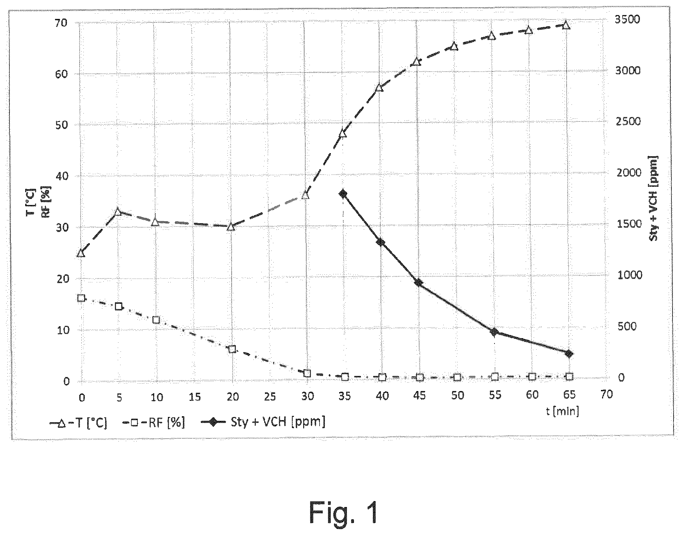

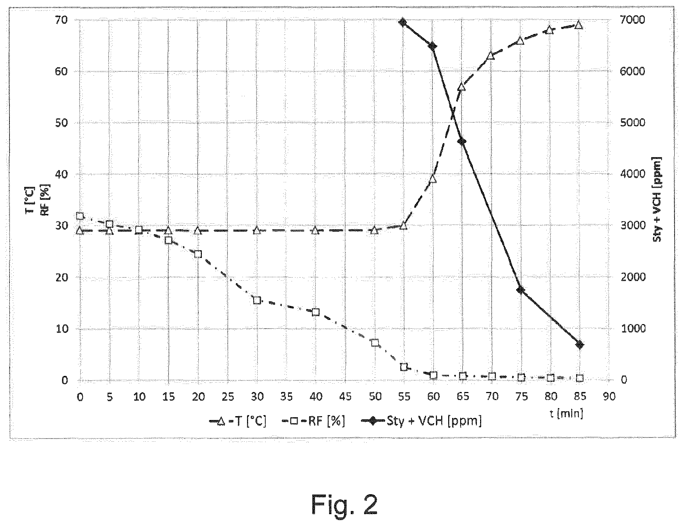

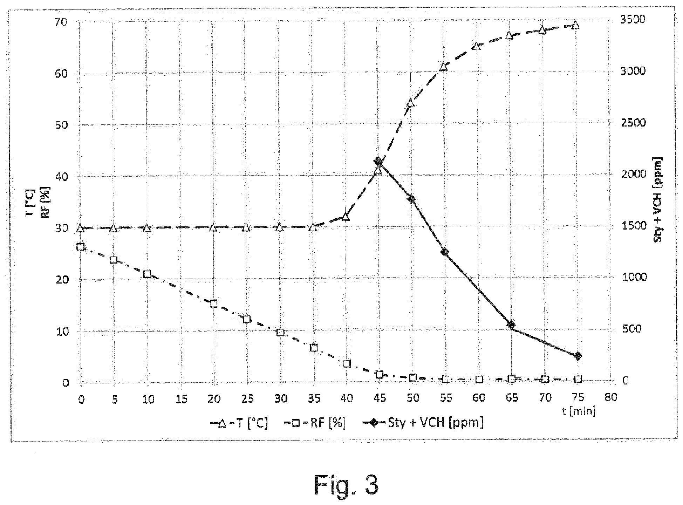

Die Figuren 1 bis 3 beschreiben den Gehalt an Styrol und 4-Vinylcyclohexen (Sty+VCH) in ppm (gefüllte Raute ♦), die Restfeuchte (RF) in Gew.-% (nicht gefüllte Quadrate □) und die Temperatur des Pfropfcopolymer-Pulvers (Fließbett-Temperatur) in °C (nicht gefüllte Dreiecke △) in Abhängigkeit der Trocknungsdauer (t [min]) bei der Trocknung in einem Fließbetttrockner. Figur 1 betrifft die Trocknung des ABS-Pulvers ABS2 nach Beispiel 5.1. Figur 2 betrifft die Trocknung des ABS-Pulvers ABS3 nach Beispiel 5.2. Figur 3 betrifft die Trocknung des ABS-Pulvers ABS4 nach Beispiel 5.3.

Die Erfindung wird durch die nachfolgenden Beispiele und Ansprüche weiter erläutert.

Beispiele

Beispiel 1 - Herstellung der Komponenten

1.1 Herstellung der ABS-Kautschuke ABS1 und ABS2 (Komponente B)

Pfropfcopolymer B-I

30 Gew.-Teile (gerechnet als Feststoff) eines anionisch emulgierten Polybutadien-Latex (Pfropfgrundlage B1-A) mit einem mittleren Teilchendurchmesser $d_{50}$ von 299 nm und einem Gelgehalt von 60 Gew.-% und 30 Gew.-Teile (gerechnet als Feststoff) eines anionisch emulgierten Polybutadien-Latex (Pfropfgrundlage B1-B) mit einem mittleren Teilchendurchmesser $d_{50}$ von 371 nm und einem Gelgehalt von 82 Gew.-% wurden mit entionisiertem Wasser auf einen Feststoffgehalt von ca. 27 Gew.-% gebracht. Die Polybutadien-Latices wurden jeweils ausgehend von einem Polybutadien-Saatlatex mit einem mittleren Teilchendurchmesser $d_{50}$ von 113 nm durch radikalische Emulsionspolymerisation hergestellt. Der mittlere Teilchendurchmesser $d_{50}$ ist der Durchmesser, bei dem 50 Vol.-% der Partikel (z.B. des Polybutadien-Latex) kleiner und die anderen 50 Vol.-% größer als der $d_{50}$ Durchmesser sind.

Anschließend wurde die Mischung auf 60 °C erwärmt und mit 0,25 Gew.-Teilen Kaliumperoxodisulfat (gelöst in Wasser) versetzt.

Danach wurden 40 Gew.-Teile eines Gemisches aus 74,5 Gew.-% Styrol; 25,5 Gew.-% Acrylnitril und 0,12 Gew.-Teile tert.-Dodecylmercaptan innerhalb von 5 Stunden gleichmäßig dosiert. Parallel dazu wurde 1,3 Gew.-Teil (gerechnet als Festsubstanz) des Natriumsalzes eines Harzsäuregemisches (Burez DRS S70 E, Lawter BVBA, B-9130 Kallo, Belgien, gelöst in alkalisch eingestelltem Wasser) über einen Zeitraum von 5 Stunden dosiert und 0,25 Gew.-Teilen Kaliumperoxodisulfat (gelöst in entionisiertem Wasser) ebenfalls über einen Zeitraum von 5 Stunden dosiert. Im Laufe der ersten 3 Stunden wurde die Reaktionstemperatur von 60 °C auf 81 °C angehoben. Nach Ende aller Dosierungen folgten eine zweistündige Nachreaktionszeit bei 81°C und anschließend das Abkühlen des Pfropfcopolymers B-I auf Raumtemperatur. Der gravimetrisch ermittelte Feststoffgehalt (Trocknung im Umluft-Trockenschrank bei 180 °C, 23 Minuten) des Pfropfcopolymers B-I betrug 34,9 Gew.-%.

Pfropfcopolymer B-II

51,5 Gew.-Teile (gerechnet als Feststoff) eines anionisch emulgierten Polybutadien-Latex (Pfropfgrundlage B1-C) mit einem mittleren Teilchendurchmesser $d_{50}$ von 113 nm und einem Gelgehalt von 91 Gew.-% wurde mit entionisiertem Wasser auf einen Feststoffgehalt von ca. 27 Gew.-% gebracht.

Der Polybutadien-Latex wurden ausgehend von einem Polybutadien-Saatlatex mit einem mittleren Teilchendurchmesser $d_{50}$ von 49 nm durch radikalische Saatpolymerisation hergestellt.

Anschließend wurde die Mischung auf 60 °C erwärmt und mit 0,25 Gew.-Teilen Kaliumperoxodisulfat (gelöst in Wasser) versetzt.

Danach wurden 48,5 Gew.-Teile eines Gemisches aus 74,5 Gew.-% Styrol, 25,5 Gew.-% Acrylnitril und 0,10 Gew.-Teile tert.-Dodecylmercaptan innerhalb von 5 Stunden gleichmäßig dosiert, parallel dazu wurde 1 Gew.-Teil (gerechnet als Festsubstanz) des Natriumsalzes eines Harzsäuregemisches (Burez DRS S70 E, Lawter BVBA, B-9130 Kallo, Belgien, gelöst in alkalisch eingestelltem Wasser) über einen Zeitraum von 5 Stunden dosiert und 0,25 Gew.-Teilen Kaliumperoxodisulfat (gelöst in entionisiertem Wasser) über einen Zeitraum von 5 Stunden dosiert.

Im Laufe der ersten 3 Stunden wurde die Reaktionstemperatur von 60 °C auf 81 °C angehoben. Nach Ende aller Dosierungen folgte eine zweistündige Nachreaktion bei 81 °C und anschließend das Abkühlen des Pfropfcopolymers B-II auf Raumtemperatur. Der gravimetrisch ermittelte Feststoffgehalt (Trocknung im Umluft-Trockenschrank bei 180 °C, 23 Minuten) des Pfropfcopolymers B-II betrug 34,2 Gew.-%.

Gefälltes Pfropfcopolymer B

Die Pfropfcopolymere B-I und B-II wie oben beschrieben wurden im Gewichtsverhältnis 60 : 40 (gerechnet als Feststoff) durch Rühren vermischt. Zu dieser Mischung wurden 1,0 Gew.-% eines phenolischen Antioxidans (Irganox 1076, BASF SE) bezogen auf den Feststoff der Pfropfcopolymere B-I und B-II in Form einer Dispersion zugegeben und vermischt.

Anschließend wurde mit einer Magnesiumsulfat/Schwefelsäure-Lösung kontinuierlich koaguliert. Dazu wurde die Mischung aus den Pfropfcopolymeren B-I und B-II, eine Magnesiumsulfat-Lösung (18 Gew.-%) und Schwefelsäure (15 Gew.-%) kontinuierlich in einen gerührten Fällbehälter I dosiert, der durch Dampfeinspeisung auf 94 °C gehalten wurde. Dabei wurden folgende Konzentrationen im Fällbehälter I eingehalten:

- 2,6 Gew.-% Magnesiumsulfat bezogen auf die Mischung der Pfropfcopolymere B-I und B-II, gerechnet als Feststoff,

- 0,4 Gew.-% Schwefelsäure (gerechnet als 100%iges Material) bezogen auf die Mischung der Pfropfcopolymere B-I und B-II, gerechnet als Feststoff,

- 18 Gew.-% Mischung der Pfropfcopolymere B-I und B-II, gerechnet als Feststoff, bezogen auf alle im Fällbehälter dosierten Stoffe.

Die mittlere Verweilzeit im Fällbehälter betrug 15 Minuten. Zur Vervollständigung der Fällung wurde der Inhalt aus dem Fällbehälter I kontinuierlich in den Fällbehälter II dosiert. Die mittlere Verweilzeit im Fällbehälter II betrug 15 Minuten und die Temperatur wurde bei ca. 92 bis 94 °C gehalten. Die gefällte Mischung der Pfropfcopolymere B-I und B-II aus Fällbehälter II wurde nach dem Abkühlen auf 70°C durch Zentrifugation bei einer Zentripedalbeschleunigung von 320 g für 10 Sekunden von der wässrigen Phase abgetrennt. Es wurde ein wasserfeuchte Pfropfcopolymer B mit einer Restfeuchte von 30 Gew.-% (ABS1) erhalten.

Eine weitere Probe des gefällten Pfropfcopolymers B wurde nach dem Abkühlen auf 70°C durch Zentrifugation bei einer Zentripedalbeschleunigung von 650 g für 60 Sekunden von der wässrigen Phase abgetrennt, so dass ein wasserfeuchte Pfropfcopolymer B mit einer Restfeuchte von 16,2 Gew.-% (ABS2) erhalten wurde.

1.2 Herstellung des ABS-Kautschuks ABS3 (Komponente B)

Der ABS-Kautschuk ABS3 (Pfropfcopolymer B) wurde nach WO 2012/022710, Seite 28, Beispiel "Graft rubber polymer I5" hergestellt. Nach der Fällung mit Schwefelsäure wurde das wasserfeuchte Pfropfcopolymer ABS3 durch Zentrifugation von der wässrigen Phase abgetrennt; die Restfeuchte betrug 31,8 Gew.-%.

1.3 Herstellung des ABS-Kautschuks ABS4 (Komponente B)

Der ABS-Kautschuk ABS4 (Pfropfcopolymer B) wurde nach WO 2014/170407 A1, Seite 31-32, Beispiel "Pfropfcopolymer B-1" hergestellt. Nach der Fällung mit einer Magnesiumsulfat-Lösung wurde das wasserfeuchte Pfropfcopolymer B-IV durch Zentrifugation von der wässrigen Phase abgetrennt; die Restfeuchte betrug 26,2 Gew.-%.

Thermoplastisches Copolymer A

Es wurde ein statistisches Styrol/Acrylnitril-Copolymer (Styrol: Acrylnitril-Gewichtsverhältnis 73:27) mit einer gewichtsgemittelten Molmasse $M_w$ von 106.000 g/mol und einer zahlengemittelten Molmasse $M_n$ von 15.000 g/mol, durch radikalische Lösungspolymerisation mit peroxidischer Initiierung hergestellt. Die Molmassen $M_w$ und $M_n$ wurden durch Gelpermeationschromatographie mit Tetrahydrofuran als Lösungsmittel und Polystyrol zur Kalibrierung ermittelt. Der Oligomerengehalt mit einer Molmasse kleiner 1.000 g/mol betrug 1,0 Gew.-%, und wurde ebenfalls durch Gelpermeationschromatographie mit Tetrahydrofuran als Lösungsmittel und Polystyrol zur Kalibrierung ermittelt. Die Bestimmung des Oligomerengehalts in statistischen Styrol/Acrylnitril-Copolymereren ist in K. Kirchner, H. Schlapkohl (Makromol. Chem. 177 (1976) 2031-2042, "The Formation of Oligomers in the Thermal Copolymerisation of the Styrene/Acrylonitrile-System") beschrieben.

Beispiel 2: Trocknung des Pfropfcopolymers B

Beispiel 2A: Trocknen des Pfropfcopolymers B (ABS1) mit einem Stromtrockner

Das wasserfeuchte Pfropfcopolymer B (co-gefällte Pfropfcopolymere B-I und B-II wie oben unter Beispiel 1.1 beschrieben) mit einer Restfeuchte von 30 Gew.-% (ABS1) wurde in einem Stromtrockner und einer Stickstoff/Luftmischung mit einem Anteil von kleiner 1 Vol.-% Sauerstoff als Trägergas getrocknet. Typischerweise betrug die Verweilzeit des Pfropfcopolymers B 5 bis 10 Sekunden bis es seine Endrestfeuchte erreicht hatte. Die Temperatur des Trägergases betrug 145 °C und die Produkttemperatur betrug 85 °C. Die Restfeuchte betrug nach dem Trocknen 0,7 Gew.-%. Das Material wurde in Form eines feinteiligen Pulvers mit einer mittleren Korngröße $d_{50}$ von 0.4 μm erhalten. Die Korngröße $d_{50}$ wurde durch eine Siebanalyse nach ISO 3310-1 mit den folgenden Sieben durchgeführt: 63, 100, 150, 200, 300, 500, 800 und 2000 μm durchgeführt.

Beispiel 2B: Trocknen des Pfropfcopolymers B (ABS1) mit einem Fließbetttrockner

Das wasserfeuchte Pfropfcopolymer B (co-gefällte Pfropfcopolymere B-I und B-II wie oben unter Beispiel 1.1 beschrieben) mit einer Restfeuchte von 30 Gew.-% (ABS1) wurde in einem Fließbetttrockner mit Luft als Trägergas getrocknet. Die Verweilzeit betrug 35 Minuten. Die Temperatur der Luft betrug 80 °C und die Produkttemperatur betrug 48°C. Die Restfeuchte betrug nach dem Trocknen 0,5 Gew.-%. Das Material wurde in Form eines feinteiligen Pulvers mit einer mittleren Korngröße $d_{50}$ von 0.4 μm (mittels Siebanalyse nach ISO 3310-1) erhalten.

Beispiel 2C: Trocknen des Pfropfcopolymers B in einem Umluft-Trockenschrank

Das wasserfeuchte Pfropfcopolymer B (co-gefällte Pfropfcopolymere B-I und B-II wie oben unter Beispiel 1.1 beschrieben) mit einer Restfeuchte von 30 Gew.-% (ABS1) wurde in einem Umluft-Trockenschrank 2 Tage bei 70 °C bis zu einer Restfeuchte von 0,7 Gew.-% getrocknet. Das Material wurde in Form eines feinteiligen Pulvers mit einer mittleren Korngröße $d_{50}$ von 0.4 μm (mittels Siebanalyse nach ISO 3310-1) erhalten.

Beispiel 2D: Trocknen des Pfropfcopolymers B in einem Extruder bei gleichzeitiger Verarbeitung zu Formkörpern

Das Trocknen des wasserfeuchten Pfropfcopolymer B (co-gefällte Pfropfcopolymere B-I und B-II mit einer Restfeuchte von 30 Gew.-% wie oben beschrieben) (ABS1) wurde entsprechend der Patentanmeldung EP-A 0734825 durchgeführt.

Hierzu wurde das Pfropfcopolymer B mechanisch auf einem Zweischneckenextruder (Doppelwellenextruder) entwässert. Das thermoplastische Copolymer A und Silikonöl wurden als Schmelze in den Zweischneckenextruder eingeführt und mit dem Pfropfcopolymer B vermischt, wobei die ABS-Formmassen F4 nach Extrusion über eine Düsenleiste und Granulierung als Granulate erhalten wurden.

Die Formmasse F4 wurde in einem Schritt als Granulat erhalten und anschließend zu Formkörpern verarbeitet. Die Zusammensetzung der ABS-Formmasse F4 ist in Tabelle 1 unten angegeben.

Beispiel 3: Herstellen von ABS-Formmassen und -Formkörpern

Die oben beschriebenen Pfropfcopolymere B gemäß den Beispielen 2A bis 2C wurden auf einem Extruder ZSK 25 (Hersteller Coperion) mit dem thermoplastische Copolymer A und 0,10 Gew.-Teilen eines Polydimethylsiloxans mit einer Viskosität von 1000 centiStokes vermischt und granuliert. Die Anteile sind in der Tabelle 1 unten angegeben.

Aus den so erhaltenen Granulaten wurden Plättchen (75 x 50 x 2.5 mm) in einem Spritzgusswerkzeug mit polierter Oberfläche bei einer Massetemperatur von 240 °C und einer Werkzeugtemperatur von 70 °C hergestellt.

Beispiel 4: Untersuchung der Oberflächenhomogenität

Um feucht-warmen Umgebungsbedingungen zu simulieren, wurden die Plättchen (75 x 50 x 2.5 mm) 8 Stunden in entionisiertem Wasser bei 80 °C gelagert. Nach Trocknung der Plättchen wurden die mit bloßem Auge sichtbaren Oberflächendefekte in einem Sehabstand von ca. 30 bis 40 cm ausgezählt und als Anzahl der Oberflächenstörungen (Stippen) angegeben.

Es wurden je Formmasse jeweils vier Plättchen getestet. Bei dem Test wurde nur die polierte Fläche bewertet. Das heißt es wurde die Anzahl der Oberflächenstörungen auf einer Testfläche von insgesamt 150 cm$^2$ ausgezählt und in der Tabelle 1 unten angegeben.

Tabelle 1: Zusammensetzung und Prüfdaten der Formmassen F1 bis F4

| Formmassen | | F1 | F2 | F3 | F4 |
|---|---|---|---|---|---|
| | | erfindungsgemäß | erfindungsgemäß | nicht erfindungsgemäß | nicht erfindungsgemäß |
| Pfropfcopolymer nach Beispiel 2A | Gew.-% | 48,2 | | | |
| Pfropfcopolymer nach Beispiel 2B | Gew.-% | | 48,2 | | |
| Pfropfcopolymer nach Beispiel 2C | Gew.-% | | | 48,2 | |
| Pfropfcopolymer nach Beispiel 2D | Gew.-% | | | | 48,2 |
| Copolymer A | Gew.-% | 51,7 | 51,7 | 51,7 | 51,7 |
| Polydimethylsiloxan | Gew.-% | 0,1 | 0,1 | 0,1 | 0,1 |
| Summe | Gew.-% | 100 | 100 | 100 | 100 |
| Anzahl der Oberflächenstörungen | Anzahl | 0 | 4 | 21 | 22 |

Bei den Formmassen F1 und F2 handelt es sich um erfindungsgemäße Formmassen, d.h. um Formmassen enthaltend erfindungsgemäß getrocknete Pfropfcopolymere B. Die Formmassen F3 und F4 sind Vergleichsbeispiele enthaltend nichterfindungsgemäß getrocknete Pfropfcopolymere B.

Aus den Prüfergebnissen der Formmassen F1 bis F4 wird ersichtlich, dass die mit dem erfindungsgemäßen Verfahren hergestellten Formmassen bzw. daraus hergestellte Formteile eine niedrige Anzahl von Oberflächenstörungen (Stippen) und damit eine bessere Oberflächenhomogenität nach der Lagerung in feucht-warmer Umgebung aufweisen, während bei den nicht erfindungsgemäßen Formmassen eine deutlich höhere Anzahl von Oberflächenstörungen resultiert. Es kann vermutet werden, dass durch die Trocknung im Fließbetttrockner oder in einem Stromtrockner eine besonders schnelle und gleichmäßige Trocknung stattfindet, was zu kleinen Salzeinlagerungen (z.B. Salzkristallen) führt, welche wenige mit bloßem Auge sichtbare Oberflächenstörungen hervorrufen.

Beispiel 5: Untersuchung zum Gehalt an Restmonomeren

Der Gehalt an Restmonomeren in Abhängigkeit der Trocknung im Fließbetttrockner wurde an den folgenden ABS-Pfropfcopolymere (Komponente B), wie oben beschrieben, untersucht:

ABS2    Pfropfcopolymer B hergestellt wie in Beispiel 1.1 beschrieben, mit einer Restfeuchte von 16,2 Gew.-%;
ABS3    Pfropfcopolymer B hergestellt wie in Beispiel 1.2 beschrieben, mit einer Restfeuchte von 31,8 Gew.-%;
ABS4    Pfropfcopolymer B hergestellt wie in Beispiel 1.3 beschrieben, mit einer Restfeuchte von 26.2 Gew.-%;
2A    Pfropfcopolymer B hergestellt wie in Beispiel 1.1 beschrieben und im Stromtrockner gemäß Beispiel 2A getrocknet, mit einer Restfeuchte von 0,7 Gew.-%;

Es wurden jeweils der Gehalt an Styrol (Sty) und 4-Vinylcylohexen (VCH) mittels Headspace-Gaschromatographie mit externer Kalibrierung und Verwendung von para-Xylol als internem Standard bestimmt. Hierzu wurde jeweils 1 g des Pfropfcopolymer-Pulvers in 5 g Dimethylsulfoxid mit zugesetztem internem Standard durch Schütteln dispergiert und bei einer Probentemperatur von 94 °C per Headspace-Gaschromatographie gemessen. Die Temperatur der Injektionsnadel betrug 98 °C und die Temperatur der Transferleitung zwischen dem Headspace-Autosampler und dem Gaschromatograph betrug 135 °C. Als Headspace-Autosampler kam ein Perkin-Elmer HS-40 und als Gaschromatograph ein Hewlett Packard 5890 Series II zum Einsatz. Es wird zudem die Summe an Styrol und 4-Vinylcyclohexen in ppm angegeben, wobei die Bezugsgröße die Einwaage des Pfropfcopolymer-Pulvers ist.

Die ABS-Pfropfcopolymere wurden ähnlich wie in Beispiel 2B beschrieben in einem Fließbetttrockner getrocknet

5.1 Trocknung ABS2

Das wasserfeuchte ABS2 mit einer Restfeuchte von 16,2 Gew.-% wurde in einem Fließbetttrockner mit Luft als Trägergas getrocknet. Die Verweilzeit betrug insgesamt 65 min. Die Temperatur der Luft betrug 80 °C. Der Temperaturverlauf des Pfropfpolymerpulvers B (Produkttemperatur oder Fließbett-Temperatur), die Restfeuchte sowie die Summe an Restmonomeren Styrol und 4-Vinylcyclohexen sind in Tabelle 2 zusammengefasst.

Tabelle 2: Trocknen des Pfropfcopolymers ABS2 mit einem Fließbetttrockner

| Trocknungszeit [min] | Temperatur Fließbett [°C] | Restfeuchte [Gew.-%] | Sty + VCH [ppm] |
|---|---|---|---|
| 0 | 25 | 16,2 | n.b. |
| 5 | 33 | 14,5 | n.b. |
| 10 | 31 | 11,9 | n.b. |
| 20 | 30 | 6,1 | n.b. |
| 30 | 36 | 1,2 | n.b. |
| 35 | 48 | 0,5 | 1809 |
| 40 | 57 | 0,4 | 1335 |
| 45 | 62 | 0,3 | 933 |
| 50 | 65 | 0,3 | n.b. |
| 55 | 67 | 0,3 | 451 |

(fortgesetzt)

| Trocknungszeit [min] | Temperatur Fließbett [°C] | Restfeuchte [Gew.-%] | Sty + VCH [ppm] |
|---|---|---|---|
| 60 | 68 | 0,3 | n.b. |
| 65 | 69 | 0,3 | 235 |
| n.b.: nicht bestimmt | | | |

Die Produkttemperatur betrug 48 °C nach den ersten 35 min. Nach dieser ersten Trocknungsphase nach 35 min betrug die Restfeuchte 0,5 Gew.-% und der Gehalt an Styrol und 4-Vinylcyclohexen betrug 1.809 ppm. Das Material wurde in Form eines feinteiligen Pulvers mit einer mittleren Korngröße $d_{50}$ von 0,4 $\mu$m erhalten.

Die Trocknung im Fließbetttrockner wurde danach für weitere 30 Minuten durchgeführt, wobei die Lufttemperatur unverändert bei 80 °C lag. Dabei nahmen die flüchtigen Verbindungen Styrol und 4-Vinylcyclohexen von insgesamt 1.809 ppm auf 235 ppm ab.

Die Ergebnisse sind zudem in der Figur 1 dargestellt. Figur 1 beschreibt den Gehalt an Styrol und 4-Vinylcyclohexen (Sty+VCH) in ppm (gefüllte Raute ♦), die Restfeuchte (RF) in Gew.-% (nicht gefüllte Quadrate □) und die Temperatur des Pfropfcopolymer-Pulvers in °C (nicht gefüllte Dreiecke △) in Abhängigkeit der Trocknungsdauer (t [min]).

5.2 Trocknung ABS3

Das wasserfeuchte ABS3 mit einer Restfeuchte von 31,8 Gew.-% wurde in einem Fließbetttrockner mit Luft als Trägergas getrocknet. Die Verweilzeit betrug insgesamt 85 min.

Die Temperatur der Luft betrug 80 °C. Der Temperaturverlauf des Pfropfpolymerpulvers B (Produkttemperatur oder Fließbett-Temperatur), die Restfeuchte sowie die Summe an Restmonomeren Styrol und 4-Vinylcyclohexen sind in Tabelle 3 zusammengefasst.

Tabelle 3: Trocknen des Pfropfcopolymers ABS3 mit einem Fließbetttrockner

| Trocknungszeit [min] | Temperatur Fließbett [°C] | Restfeuchte [Gew.-%] | Sty + VCH [ppm] |
|---|---|---|---|
| 0 | 29 | 31,8 | n.b. |
| 5 | 29 | 30.3 | n.b. |
| 10 | 29 | 29.2 | n.b. |
| 15 | 29 | 27.1 | n.b. |
| 20 | 29 | 24.5 | n.b. |
| 30 | 29 | 15.5 | n.b. |
| 40 | 29 | 13.2 | n.b. |
| 50 | 29 | 7.2 | n.b. |
| 55 | 30 | 2.5 | 6946 |
| 60 | 39 | 0.9 | 6481 |
| 65 | 57 | 0.7 | 4623 |
| 70 | 63 | 0.6 | n.b. |
| 75 | 66 | 0.5 | 1743 |
| 80 | 68 | 0.4 | n.b. |
| 85 | 69 | 0.3 | 677 |
| n.b.: nicht bestimmt | | | |

Die Produkttemperatur betrug 39 °C nach den ersten 60 min. Nach dieser ersten Trocknungsphase nach 60 min betrug die Restfeuchte 0,9 Gew.-% und der Gehalt an Styrol und 4-Vinylcyclohexen betrug 6.481 ppm. Das Material wurde in Form eines feinteiligen Pulvers mit einer mittleren Korngröße $d_{50}$ von 0,54 $\mu$m (bestimmt mittels Siebanalyse nach ISO 3310-1) erhalten.

Die Trocknung im Fließbetttrockner wurde danach für weitere 25 Minuten durchgeführt, wobei die Lufttemperatur unverändert bei 80 °C lag. Dabei nahmen die flüchtigen Verbindungen Styrol und 4-Vinylcyclohexen von insgesamt 6.481 ppm auf 677 ppm ab.

Die Ergebnisse sind zudem in der Figur 2 dargestellt. Figur 2 beschreibt den Gehalt an Styrol und 4-Vinylcyclohexen (Sty+VCH) in ppm (gefüllte Raute ♦), die Restfeuchte (RF) in Gew.-% (nicht gefüllte Quadrate □) und die Temperatur des Pfropfcopolymer-Pulvers in °C (nicht gefüllte Dreiecke △) in Abhängigkeit der Trocknungsdauer (t [min]).

### 5.3 Trocknung ABS4

Das wasserfeuchte Pfropfcopolymer ABS4 mit einer Restfeuchte von 26,2 Gew.-% wurde in einem Fließbetttrockner mit Luft als Trägergas getrocknet. Die Verweilzeit betrug insgesamt 75 min. Die Temperatur der Luft betrug 80 °C. Der Temperaturverlauf des Pfropfpolymerpulvers B (Produkttemperatur oder Fließbett-Temperatur), die Restfeuchte sowie die Summe an Restmonomeren Styrol und 4-Vinylcyclohexen sind in Tabelle 4 zusammengefasst.

Tabelle 4: Trocknen des Pfropfcopolymers ABS4 mit einem Fließbetttrockner

| Trocknungszeit [min] | Temperatur Fließbett [°C] | Restfeuchte [Gew.-%] | Sty + VCH [ppm] |
|---|---|---|---|
| 0 | 30 | 26.3 | n.b. |
| 5 | 30 | 23.8 | n.b. |
| 10 | 30 | 21 | n.b. |
| 20 | 30 | 15.2 | n.b. |
| 25 | 30 | 12.2 | n.b. |
| 30 | 30 | 9.6 | n.b. |
| 35 | 30 | 6.6 | n.b. |
| 40 | 32 | 3.4 | n.b. |
| 45 | 41 | 1.3 | 2.133 |
| 50 | 54 | 0.6 | 1.766 |
| 55 | 61 | 0.4 | 1.249 |
| 60 | 65 | 0.3 | n.b. |
| 65 | 67 | 0.4 | 536 |
| 70 | 68 | 0.3 | n.b. |
| 75 | 69 | 0.3 | 235 |
| n.b.: nicht bestimmt | | | |

Die Produkttemperatur betrug 41 °C nach den ersten 45 min. Nach dieser ersten Trocknungsphase nach 45 min betrug die Restfeuchte 1,3 Gew.-% und der Gehalt an Styrol und 4-Vinylcyclohexen betrug 2.133 ppm.

Das Material wurde in Form eines feinteiligen Pulvers mit einer mittleren Korngröße $d_{50}$ von 0,37 $\mu$m erhalten. Die Trocknung im Fließbetttrockner wurde danach für weitere 30 Minuten durchgeführt, wobei die Lufttemperatur unverändert bei 80 °C lag. Dabei nahmen die flüchtigen Verbindungen Styrol und 4-Vinylcyclohexen von insgesamt 2133 ppm auf 235 ppm ab.

Die Ergebnisse sind zudem in der Figur 3 dargestellt. Figur 3 beschreibt den Gehalt an Styrol und 4-Vinylcyclohexen (Sty+VCH) in ppm (gefüllte Raute ♦), die Restfeuchte (RF) in Gew.-% (nicht gefüllte Quadrate □) und die Temperatur des Pfropfcopolymer-Pulvers in °C (nicht gefüllte Dreiecke △) in Abhängigkeit der Trocknungsdauer (t [min]).

### 5.4 Kombination von Stromtrockner und Fließbetttrockner

Das im Stromtrockner getrocknete Pfropfcopolymer 2A mit einer Restfeuchte von 0,7 Gew.-%, einer mittleren Korngröße $d_{50}$ von 0,4 $\mu$m und einem Gehalt an Styrol und 4-Vinylcyclohexen von 5.147 ppm (Beispiel 2A oben) wurde in einem Fließbetttrockner mit Luft als Trägergas getrocknet. Der Gehalt an Restmonomeren (Summe Styrol und 4-Vinylcyclohexen) sind in der Tabelle 5 zusammengefasst.

Die Verweilzeit im Fließbetttrockner betrug 20 Minuten. Die mittlere Produkttemperatur betrug 70 °C. Dabei nahmen die flüchtigen Verbindungen Styrol und 4-Vinylcyclohexen von insgesamt 5.147 ppm auf 255 ppm ab. Die Restfeuchte des getrockneten Pfropfcopolymer 2A betrug 0,3 Gew.-%.

Tabelle 5: Trocknen des Pfropfcopolymers 2A mit einem Fließbetttrockner

| Trocknungszeit [min] | Sty + VCH [ppm] |
|---|---|
| 0 | 5.147 |
| 2,5 | 3.750 |
| 5 | 2.524 |
| 7,5 | 1.760 |
| 10 | 1.280 |
| 12,5 | 878 |
| 15 | 606 |
| 17,5 | 379 |
| 20 | 255 |

5.5 Herstellung von thermoplastischen Formmassen und Formkörpern, Testung der Oberflächenhomogenität

Die nach den Beispielen 5.1 bis 5.4 getrockneten ABS-Pfropfcopolymer-Pulver wurden als Komponente B zur Herstellung von ABS-Formmassen und -Formkörpern eingesetzt. Hierzu wurden die getrockneten Pfropfcopolymere 5.1 bis 5.4 wie in Beispiel 3 beschrieben auf einem Extruder ZSK 25 (Hersteller Coperion) mit dem thermoplastische Copolymer A und Polydimethylsiloxan mit einer Viskosität von 1000 centiStokes vermischt und granuliert. Die Anteile sind in der Tabelle 6 unten angegeben.

Aus den so erhaltenen Granulaten wurden Plättchen in einem Spritzgusswerkzeug mit polierter Oberfläche wie in Beispiel 3 beschrieben hergestellt. Die Oberflächenhomogenität der Plättchen unter feucht-warmen Umgebungstemperaturen wurde wie in Beispiel 4 beschrieben untersucht. Die Ergebnisse sind in der Tabelle 6 unten angegeben.

Tabelle 6: Zusammensetzung und Prüfdaten der Formmassen F5 bis F8

| Formmassen | | | F5 | F6 | F7 | F8 |
|---|---|---|---|---|---|---|
| | | Bemerkung | erfindungsgemäß | nicht erfindungsgemäß | nicht erfindungsgemäß | erfindungsgemäß |
| Pfropfcopolymer 5.1 | Gew.-% | ABS2 getrocknet | 48,2 | | | |
| Pfropfcopolymer 5.2 | Gew.-% | ABS3 getrocknet | | 46,7 | | |
| Pfropfcopolymer 5.3 | Gew.-% | ABS4 getrocknet | | | 46,7 | |
| Pfropfcopolymer 5.4 | Gew.-% | 2A getrocknet (Kombination Strom- und Fließbetttrockner) | | | | 48,2 |
| Copolymer A | Gew.-% | | 51,7 | 53,225 | 53,225 | 51,7 |
| Polydimethylsiloxan | Gew.-% | | 0,1 | 0,075 | 0,075 | 0,1 |
| Summe | Gew.-% | | 100 | 100 | 100 | 100 |
| Anzahl der Oberflächenstörungen | Anzahl | | 0 | 7 | 11 | 0 |

Es zeigte sich, dass die erfindungsgemäßen Formmassen F5 und F8, welche ausgehend von einem Pfropfcopolymer B mit niedrigerem Gehalt an Restmonomeren und geringerem Wassergehalt (stärker getrocknet) im Vergleich zu den erfindungsgemäßen Formmassen F1 und F2 (Tabelle 1) hergestellt wurden, ähnlich gute Oberflächenhomogenität aufweisen. Die erfindungsgemäßen Formmassen F5 und F8 zeichnen sich zusätzlich noch durch den verminderten Gehalt an Restmonomer, insbesondere an Styrol und 4-Vinylcyclohexen gegenüber den Formmassen F1 bis F4 aus.

## Patentansprüche

1. Verfahren zur Herstellung einer thermoplastischen Formmasse enthaltend:

A: 5 bis 95 Gew.-% mindestens eines thermoplastischen Copolymers A hergestellt aus:

A1: 50 bis 95 Gew.-%, bezogen auf das Copolymer A, eines Monomers A1, ausgewählt aus Styrol, $\alpha$-Methylstyrol oder Mischungen von Styrol und mindestens einem weiteren Monomer ausgewählt aus $\alpha$-Methylstyrol, p-Methylstyrol und (Meth)acrylsäure-$C_1$-$C_8$-alkylester,

A2: 5 bis 50 Gew.-%, bezogen auf das Copolymer A, eines Monomers A2, ausgewählt aus Acrylnitril oder Mischungen von Acrylnitril und mindestens einem weiteren Monomer ausgewählt aus Methacrylnitril, Anhydriden ungesättigter Carbonsäuren und Imiden ungesättigter Carbonsäuren,

B: 5 bis 95 Gew.-%, mindestens eines Pfropfcopolymers B, enthaltend:

B1: 40 bis 85 Gew.-%, bezogen auf das Pfropfcopolymer B, mindestens einer Pfropfgrundlage B1, welche erhalten wird durch Emulsionspolymerisation von:

B11: 50 bis 100 Gew.-%, bezogen auf die Pfropfgrundlage B1, Butadien,

B12: 0 bis 50 Gew.-%, bezogen auf die Pfropfgrundlage B1, mindestens eines weiteren Monomers B12 ausgewählt aus Styrol, $\alpha$-Methylstyrol, Acrylnitril, Methacrylnitril, Isopren, Chloropren, $C_1$-$C_4$-Alkylstyrol, (Meth)acrylsäure-$C_1$-$C_8$-alkylester, Alkylenglykol-di(meth)acrylat und Divinylbenzol;

wobei die Summe B11 + B12 gerade 100 Gew.-% ergibt; und

B2: 15 bis 60 Gew.-%, bezogen auf das Pfropfcopolymer B, einer Pfropfhülle B2, welche erhalten wird durch Emulsionspolymerisation in Gegenwart der mindestens einen Pfropfgrundlage B1 von:

B21 50 bis 95 Gew.-%, bezogen auf die Pfropfhülle B2, eines Monomers B21, ausgewählt aus Styrol oder Mischungen von Styrol und mindestens einem weiteren Monomer ausgewählt aus $\alpha$-Methylstyrol, p-Methylstyrol und (Meth)acrylsäure-$C_1$-$C_8$-alkylester,

B22 5 bis 50 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Anhydriden ungesättigter Carbonsäuren und Imiden ungesättigter Carbonsäuren;

wobei die Gesamtsumme aus Pfropfgrundlage B1 und Pfropfhülle B2 gerade 100 Gew.-% ergibt; und

K: 0 bis 90 Gew.-%, mindestens einer weiteren Komponente K,

umfassend die Schritte:

a) Fällen des mindestens einen Pfropfcopolymers B nach der Emulsionspolymerisation durch Zugabe einer Fällungslösung enthaltend mindestens ein Salz und mindestens eine anorganische Säure;
b) mechanisches Entwässern des gefällten Pfropfcopolymers B, wobei ein Pfropfcopolymer B mit einem Wassergehalt von kleiner oder gleich 50 Gew.% erhalten wird;
c) Trocknen des entwässerten Pfropfcopolymers B unter Verwendung eines Trocknungsgases, wobei das Pfropfcopolymer B in dem Trocknungsgas bewegt wird und das Trocknungsgas eine Temperatur im Bereich von 50 bis 160 °C aufweist;
d) Vermischen des thermoplastischen Copolymers A, des mindestens einen getrockneten Pfropfcopolymers B und optional der weiteren Komponente(n) K.

**2.** Verfahren gemäß Anspruch 1, **dadurch gekennzeichnet, dass** das Trocknen des entwässerten Pfropfcopolymers B in Schritt c) unter Verwendung eines Fließbetttrockners und/oder einem Stromtrockners erfolgt.

**3.** Verfahren gemäß einem der Ansprüche 1 oder 2, **dadurch gekennzeichnet, dass** die Pfropfgrundlage B1 einen mittleren Teilchendurchmesser $d_{50}$ im Bereich von 100 bis 1000 nm aufweist.

**4.** Verfahren gemäß einem der Ansprüche 1 bis 3, **dadurch gekennzeichnet, dass** das Pfropfcopolymer B eine Mischung aus mindestens zwei Pfropfcopolymeren B-I und B-II darstellt, wobei

Pfropfcopolymer B-I erhalten wird durch Emulsionspolymerisation einer Mischung der Monomere B21 und B22 in Gegenwart einer Pfropfgrundlage B1-A, welche einen mittleren Teilchendurchmesser $d_{50}$ im Bereich von 230 bis 330 nm aufweist, und einer Pfropfgrundlage B1-B, welche einen mittleren Teilchendurchmesser $d_{50}$ im Bereich von 340 bis 480 nm aufweist;
und Pfropfcopolymer B-II erhalten wird durch Emulsionspolymerisation einer Mischung der Monomere B21 und B22 in Gegenwart einer Pfropfgrundlage B1-C, welche einen mittleren Teilchendurchmesser $d_{50}$ im Bereich von 10 bis 220 nm aufweist.

**5.** Verfahren gemäß Anspruch 4, **dadurch gekennzeichnet, dass** in Schritt a) die Pfropfcopolymere B-I und B-II vermischt werden und die Mischung der Pfropfcopolymere durch Zugabe der Fällungslösung enthaltend mindestens ein Salz und mindestens eine anorganische Säure gefällt wird.

**6.** Verfahren gemäß einem der Ansprüche 1 bis 5, **dadurch gekennzeichnet, dass** das Trocknen in Schritt c) mittels eines Trocknungsgases ausgewählt aus Luft und/oder Stickstoff durchgeführt wird,

wobei das Trocknen unter Verwendung eines Fließbetttrockners durchgeführt wird und das Trocknungsgas eine Temperatur im Bereich von 50 bis 100 °C aufweist
oder wobei das Trocknen unter Verwendung eines Stromtrockners durchgeführt wird und das Trocknungsgas eine Temperatur im Bereich von 100 bis 160 °C aufweist.

**7.** Verfahren gemäß einem der Ansprüche 1 bis 6, **dadurch gekennzeichnet, dass** das Trocknen in Schritt c) mittels eines Trocknungsgases ausgewählt aus Luft und/oder Stickstoff durchgeführt wird,

wobei das Trocknen unter Verwendung eines Fließbetttrockners durchgeführt wird, das Trocknungsgas eine Temperatur im Bereich von 50 bis 100 °C aufweist und die mittlere Verweilzeit des Pfropfcopolymers B im Fließbetttrockner 10 bis 60 min beträgt;
oder wobei das Trocknen unter Verwendung eines Stromtrockners durchgeführt wird, das Trocknungsgas eine Temperatur im Bereich von 100 bis 160 °C aufweist und die mittlere Verweilzeit des Pfropfcopolymers B im Stromtrockner 1 bis 300 Sekunden beträgt.

**8.** Verfahren gemäß einem der Ansprüche 1 bis 7, **dadurch gekennzeichnet, dass** das Trocknen in Schritt c) mittels eines Trocknungsgases ausgewählt aus Luft und/oder Stickstoff durchgeführt wird,
wobei das Trocknen unter Verwendung eines Fließbetttrockners, welcher einen oder mehrere in das Fließbett integrierte Wärmetauscher aufweist, durchgeführt wird; das Trocknungsgas eine Temperatur im Bereich von 50 bis 100 °C aufweist und der Wärmetauscher mit einer Temperaturen im Bereich von 50 bis 100 °C, betrieben wird.

**9.** Verfahren gemäß einem der Ansprüche 1 bis 8, **dadurch gekennzeichnet, dass** das getrocknete Pfropfcopolymer B erhalten in Schritt c) einen Wassergehalt im Bereich von 0,05 bis 0,8 Gew.-% und einen Gesamtgehalt an Restmonomeren von kleiner oder gleich 2.000 ppm aufweist.

**10.** Verwendung eines Fließbetttrockners und/oder eines Stromtrockners bei der Herstellung einer thermoplastischen Formmasse wie in Anspruch 1 beschrieben zur Trocknung des Pfropfcopolymers B, welches einen Wassergehalt von kleiner oder gleich 50 Gew.-% aufweist, nach der Emulsionspolymerisation, Fällung und mechanischen Entwässerung des Pfropfcopolymers B zur Verbesserung der Oberflächenqualität der thermoplastischen Formmasse.

**11.** Verwendung gemäß Anspruch 10, **dadurch gekennzeichnet, dass** die Trocknung des Pfropfcopolymers B in einem Fließbetttrockner und/oder einem Stromtrockner mittels eines Trocknungsgases ausgewählt aus Luft und/oder Stickstoff durchgeführt wird, und das Trocknungsgas eine Temperatur im Bereich von 50 bis 160 °C aufweist.

**12.** Verwendung gemäß einem der Ansprüche 10 oder 11, **dadurch gekennzeichnet, dass** die Verbesserung der Oberflächenqualität der thermoplastischen Formmasse eine Verminderung der Oberflächenstörungen nach einer Lagerung der Formmasse bei einer Temperatur im Bereich von 30 bis 100 °C und einer relativen Luftfeuchtigkeit im Bereich von 65 bis 100 % und/oder der direkten Einwirkung von flüssigem Wasser bei einer Temperatur im Bereich von 30 bis 100 °C auf die Oberfläche der Formmasse umfasst.

**13.** Verwendung eines Fließbetttrockners und/oder eines Stromtrockners bei der Herstellung einer thermoplastischen Formmasse wie in Anspruch 1 beschrieben zur Trocknung des Pfropfcopolymers B, welches einen Wassergehalt von kleiner oder gleich 50 Gew.-% aufweist, nach der Emulsionspolymerisation, Fällung und mechanischen Entwässerung des Pfropfcopolymers B zur Verminderung des Gesamtgehaltes an Restmonomeren im Pfropfcopolymer B.

**14.** Thermoplastische Formmasse erhältlich durch ein Verfahren gemäß einem der Ansprüche 1 bis 9, wobei die thermoplastische Formmasse Salzeinlagerungen enthält und wobei mindestens 80 % der Salzeinlagerungen, bezogen auf die gesamte Anzahl der Salzeinlagerungen, eine Größe kleiner 0,3 mm, aufweisen.

**15.** Formteil hergestellt aus einer thermoplastischen Formmasse gemäß Anspruch 14.

**Claims**

**1.** Process for the production of a thermoplastic molding composition comprising:

A: from 5 to 95% by weight of at least one thermoplastic copolymer A produced from:

A1: from 50 to 95% by weight, based on the copolymer A, of a monomer A1 selected from styrene, $\alpha$-methylstyrene or mixtures of styrene and at least one other monomer selected from $\alpha$-methylstyrene, p-methylstyrene and $C_1$-$C_8$-alkyl (meth)acrylate,
A2: from 5 to 50% by weight, based on the copolymer A, of a monomer A2 selected from acrylonitrile or mixtures of acrylonitrile and at least one other monomer selected from methacrylonitrile, anhydrides of unsaturated carboxylic acids and imides of unsaturated carboxylic acids,

B: from 5 to 95% by weight of at least one graft copolymer B comprising:

B1: from 40 to 85% by weight, based on the graft copolymer B, of at least one graft base B1 which is obtained via emulsion polymerization of:

B11: from 50 to 100% by weight, based on the graft base B1, of butadiene,
B12: from 0 to 50% by weight, based on the graft base B1, of at least one other monomer B12 selected from styrene, $\alpha$-methylstyrene, acrylonitrile, methacrylonitrile, isoprene, chloroprene, $C_1$-$C_4$-alkylstyrene, $C_1$-$C_8$-alkyl (meth)acrylate, alkylene glycol di(meth)acrylate and divinylbenzene;

where the total quantity of B11 + B12 is exactly 100% by weight; and
B2: from 15 to 60% by weight, based on the graft copolymer B, of a graft shell B2 which is obtained via emulsion polymerization in the presence of the at least one graft base B1 of:

B21 from 50 to 95% by weight, based on the graft shell B2, of a monomer B21 selected from styrene or mixtures of styrene and at least one other monomer selected from $\alpha$-methylstyrene, p-methylstyrene and $C_1$-$C_8$-alkyl (meth)acrylate,
B22 from 5 to 50% by weight, based on the graft shell B2, of a monomer B22 selected from acrylonitrile or mixtures of acrylonitrile and at least one other monomer selected from methacrylonitrile, anhydrides of unsaturated carboxylic acids and imides of unsaturated carboxylic acids;

where the total quantity of graft base B1 and graft shell B2 is exactly 100% by weight; and

K: from 0 to 90% by weight of at least one other component K,

comprising the following steps:

a) precipitation of the at least one graft copolymer B after the emulsion polymerization reaction via addition of a precipitation solution comprising at least one salt and at least one inorganic acid;

b) mechanical dewatering of the precipitated graft copolymer B, where a graft copolymer B with water content smaller than or equal to 50% by weight is obtained;

c) drying of the dewatered graft copolymer B with use of a drying gas, where the graft copolymer B is caused to move in the drying gas and the temperature of the drying gas is in the range from 50 to 160°C;

d) mixing of the thermoplastic copolymer A, of the at least one dried graft copolymer B, and optionally of the other component(s) K.

2.  Process according to Claim 1, **characterized in that** the drying of the dewatered graft copolymer B in step c) takes place with use of a fluidized-bed drier and/or of a pneumatic drier.

3.  Process according to either of Claims 1 and 2, **characterized in that** the median particle diameter $d_{50}$ of the graft base B1 is in the range from 100 to 1000 nm.

4.  Process according to any of Claims 1 to 3, **characterized in that** the graft copolymer B is a mixture of at least two graft copolymers B-I and B-II, where

graft copolymer B-I is obtained via emulsion polymerization of a mixture of the monomers B21 and B22 in the presence of a graft base B1-A which has a median particle diameter $d_{50}$ in the range from 230 to 330 nm and of a graft base B1-B which has a median particle diameter $d_{50}$ in the range from 340 to 480 nm;

and graft copolymer B-II is obtained via emulsion polymerization of a mixture of the monomers B21 and B22 in the presence of a graft base B1-C which has a median particle diameter $d_{50}$ in the range from 10 to 220 nm.

5.  Process according to Claim 4, **characterized in that** in step a) the graft copolymers B-I and B-II are mixed and the mixture of the graft copolymers is precipitated via addition of the precipitation solution comprising at least one salt and at least one inorganic acid.

6.  Process according to any of Claims 1 to 5, **characterized in that** the drying in step c) is carried out by means of a drying gas selected from air and/or nitrogen,

where the drying is carried out with use of a fluidized-bed drier and the temperature of the drying gas is in the range from 50 to 100°C

or where the drying is carried out with use of a pneumatic drier and the temperature of the drying gas is in the range from 100 to 160°C.

7.  Process according to any of Claims 1 to 6, **characterized in that** the drying in step c) is carried out by means of a drying gas selected from air and/or nitrogen,

where the drying is carried out with use of a fluidized-bed drier, the temperature of the drying gas is in the range from 50 to 100°C and the average residence time of the graft copolymer B in the fluidized-bed drier is from 10 to 60 min;

or where the drying is carried out with use of a pneumatic drier, the temperature of the drying gas is in the range from 100 to 160°C and the average residence time of the graft copolymer B in the pneumatic drier is from 1 to 300 seconds.

8.  Process according to any of Claims 1 to 7, **characterized in that** the drying in step c) is carried out by means of a drying gas selected from air and/or nitrogen, where the drying is carried out with use of a fluidized-bed drier which has one or more heat exchangers integrated into the fluidized bed; the temperature of the drying gas is in the range from 50 to 100°C, and the heat exchanger is operated at a temperature in the range from 50 to 100°C.

9.  Process according to any of Claims 1 to 8, **characterized in that** the dried graft copolymer B obtained in step c) has water content in the range from 0.05 to 0.8% by weight and total residual monomer content smaller than or equal to 2 000 ppm.

10. Use of a fluidized-bed drier and/or of a pneumatic drier in the production of a thermoplastic molding composition as described in Claim 1 for the drying of the graft copolymer B, the water content of which is smaller than or equal to 50% by weight, after the emulsion polymerization reaction, precipitation and mechanical dewatering of the graft copolymer B, in order to improve the surface quality of the thermoplastic molding composition.

11. Use according to Claim 10, **characterized in that** the drying of the graft copolymer B is carried out in a fluidized-bed drier and/or a pneumatic drier by means of a drying gas selected from air and/or nitrogen, and the temperature of the drying gas is in the range from 50 to 160°C.

12. Use according to either of Claims 10 and 11, **characterized in that** the improvement of the surface quality of the thermoplastic molding composition comprises a reduced number of surface defects after storage of the molding composition at a temperature in the range from 30 to 100°C and relative humidity in the range from 65 to 100% and/or direct action of liquid water at a temperature in the range from 30 to 100°C on the surface of the molding composition.

13. Use of a fluidized-bed drier and/or of a pneumatic drier in the production of a thermoplastic molding composition as described in Claim 1 for the drying of the graft copolymer B, the water content of which is smaller than or equal to 50% by weight, after the emulsion polymerization reaction, precipitation and mechanical dewatering of the graft copolymer B, in order to reduce total residual monomer content in the graft copolymer B.

14. Thermoplastic molding composition obtainable via a process according to any of Claims 1 to 9, where the thermoplastic molding composition comprises salt inclusions and where the size of at least 80% of the salt inclusions, based on the total number of salt inclusions, is smaller than 0.3 mm.

15. Molding produced from a thermoplastic molding composition according to Claim 14.

**Revendications**

1. Procédé pour la préparation d'une masse à mouler thermoplastique contenant :

A : 5 à 95 % en poids d'au moins un copolymère thermoplastique A préparé à partir de :

A1 : 50 à 95 % en poids, par rapport au copolymère A, d'un monomère A1, choisi parmi le styrène, l'$\alpha$-méthylstyrène et des mélanges de styrène et d'au moins un monomère supplémentaire choisi parmi l'$\alpha$-méthylstyrène, le p-méthylstyrène et des esters de $C_{1-8}$-alkyle d'acide (méth) acrylique,

A2 : 5 à 50 % en poids, par rapport au copolymère A, d'un monomère A2, choisi parmi l'acrylonitrile et des mélanges d'acrylonitrile et d'au moins un monomère supplémentaire choisi parmi le méthacrylonitrile, des anhydrides d'acides carboxyliques insaturés et des imides d'acides carboxyliques insaturés,

B : 5 à 95 % en poids, d'au moins un copolymère greffé B, contenant :

B1 : 40 à 85 % en poids, par rapport au copolymère greffé B, d'au moins une base de greffage B1, qui est obtenue par polymérisation en émulsion de : B11 : 50 à 100 % en poids, par rapport à la base de greffage B1, de butadiène, B12 : 0 à 50 % en poids, par rapport à la base de greffage B1, d'au moins un monomère supplémentaire B12 choisi parmi le styrène, l'$\alpha$-méthylstyrène, l'acrylonitrile, le méthacrylonitrile, l'isoprène, le chloroprène, un $C_{1-4}$-alkylstyrène, des esters de $C_{1-8}$-alkyle d'acide (méth) acrylique, un di (méth) acrylate d'alkylèneglycol et un divinylbenzène ; la somme B11 + B12 donnant exactement 100 % en poids ; et

B2 : 15 à 60 % en poids, par rapport au copolymère greffé B, d'une enveloppe de greffage B2, qui est obtenue par polymérisation en émulsion en présence de l'au moins une base de greffage B1 de : B21 50 à 95 % en poids, par rapport à l'enveloppe de greffage B2, d'un monomère B21, choisi parmi le styrène et des mélanges de styrène et d'au moins un monomère supplémentaire choisi parmi l'$\alpha$-méthylstyrène, le p-méthylstyrène et des esters de $C_{1-8}$-alkyle d'acide (méth) acrylique, B22 5 à 50 % en poids, par rapport à l'enveloppe de greffage B2, d'un monomère B22, choisi parmi l'acrylonitrile et des mélanges d'acrylonitrile et d'au moins un monomère supplémentaire choisi parmi le méthacrylonitrile, des anhydrides d'acides carboxyliques insaturés et des imides d'acides carboxyliques insaturés ; la somme totale de la base de greffage B1 et de l'enveloppe de greffage B2 donnant exactement 100 % en poids ; et

K : 0 à 90 % en poids d'au moins un composant supplémentaire K,

comprenant les étapes de :

a) précipitation de l'au moins un copolymère greffé B après la polymérisation en émulsion par ajout d'une solution de précipitation contenant au moins un sel et au moins un acide inorganique ;
b) déshydratation mécanique du copolymère greffé précipité B, un copolymère greffé B doté d'une teneur en eau inférieure ou égale à 50 % en poids étant obtenu ;
c) séchage du copolymère greffé déshydraté B avec utilisation d'un gaz de séchage, le copolymère greffé B étant déplacé dans le gaz de séchage et le gaz de séchage présentant une température dans la plage de 50 à 160 °C ;
d) mélange du copolymère thermoplastique A, de l'au moins un copolymère greffé séché B et éventuellement du ou des composant(s) supplémentaire(s) K.

2. Procédé selon la revendication 1, **caractérisé en ce que** le séchage du copolymère greffé déshydraté B dans l'étape c) est réalisé en utilisant un séchoir à lit fluidisé et/ou un séchoir à flux.

3. Procédé selon l'une quelconque des revendications 1 et 2, **caractérisé en ce que** la base de greffage B1 présente un diamètre moyen de particule $d_{50}$ dans la plage de 100 à 1 000 nm.

4. Procédé selon l'une quelconque des revendications 1 à 3, **caractérisé en ce que** le copolymère greffé B représente un mélange d'au moins deux copolymères greffés B-I et B-II,

le copolymère greffé B-I étant obtenu par polymérisation en émulsion d'un mélange des monomères B21 et B22 en présence d'une base de greffage B1-A, qui présente un diamètre moyen de particule $d_{50}$ dans la plage de 230 à 330 nm, et d'une base de greffage B1-B, qui présente un diamètre moyen de particule $d_{50}$ dans la plage de 340 à 480 nm ;
et le copolymère greffé B-II étant obtenu par polymérisation en émulsion d'un mélange des monomères B21 et B22 en présence d'une base de greffage B1-C, qui présente un diamètre moyen de particule $d_{50}$ dans la plage de 10 à 220 nm.

5. Procédé selon la revendication 4, **caractérisé en ce que** dans l'étape a), les copolymères greffés B-I et B-II sont mélangés et le mélange des copolymères greffés est précipité par ajout de la solution de précipitation contenant au moins un sel et au moins un acide inorganique.

6. Procédé selon l'une quelconque des revendications 1 à 5, **caractérisé en ce que** le séchage dans l'étape c) est mis en œuvre au moyen d'un gaz de séchage choisi parmi l'air et/ou l'azote,

le séchage étant mis en œuvre en utilisant un séchoir à lit fluidisé et le gaz de séchage présentant une température dans la plage de 50 à 100 °C
ou le séchage étant mis en œuvre en utilisant un séchoir à flux et le gaz de séchage présentant une température dans la plage de 100 à 160 °C.

7. Procédé selon l'une quelconque des revendications 1 à 6, **caractérisé en ce que** le séchage dans l'étape c) est mis en œuvre au moyen d'un gaz de séchage choisi parmi l'air et/ou l'azote,

le séchage étant mis en œuvre en utilisant un séchoir à lit fluidisé, le gaz de séchage présentant une température dans la plage de 50 à 100 °C et le temps de séjour moyen du copolymère greffé B dans le séchoir à lit fluidisé étant de 10 à 60 min ;
ou le séchage étant mis en œuvre en utilisant un séchoir à flux, le gaz de séchage présentant une température dans la plage de 100 à 160 °C et le temps de séjour moyen du copolymère greffé B dans le séchoir à flux étant de 1 à 300 secondes.

8. Procédé selon l'une quelconque des revendications 1 à 7, **caractérisé en ce que** le séchage dans l'étape c) est mis en œuvre au moyen d'un gaz de séchage choisi parmi l'air et/ou l'azote,
le séchage étant mis en œuvre en utilisant un séchoir à lit fluidisé qui présente un ou plusieurs échangeurs de chaleur intégrés dans le lit fluidisé ; le gaz de séchage présentant une température dans la plage de 50 à 100 °C et l'échangeur de chaleur fonctionnant à une température dans la plage de 50 à 100 °C.

9. Procédé selon l'une quelconque des revendications 1 à 8, **caractérisé en ce que** le copolymère greffé séché B obtenu dans l'étape c) présente une teneur en eau dans la plage de 0,05 à 0,8 % en poids et une teneur totale en monomères résiduels inférieure ou égale à 2 000 ppm.

10. Utilisation d'un séchoir à lit fluidisé et/ou d'un séchoir à flux lors de la préparation d'une masse à mouler thermoplastique telle que décrite dans la revendication 1 pour le séchage du copolymère greffé B qui présente une teneur en eau inférieure ou égale à 50 % en poids, après la polymérisation en émulsion, la précipitation et la déshydratation mécanique du copolymère greffé B pour l'amélioration de la qualité de surface de la masse à mouler thermoplastique.

11. Utilisation selon la revendication 10, **caractérisée en ce que** le séchage du copolymère greffé B est mis en œuvre dans un séchoir à lit fluidisé et/ou un séchoir à flux au moyen d'un gaz de séchage choisi parmi l'air et/ou l'azote, et le gaz de séchage présente une température dans la plage de 50 à 160 °C.

12. Utilisation selon l'une quelconque des revendications 10 et 11, **caractérisée en ce que** l'amélioration de la qualité de surface de la masse à mouler thermoplastique comprend une atténuation des défauts de surface après un stockage de la masse à mouler à une température dans la plage de 30 à 100 °C et une humidité de l'air relative dans la plage de 65 à 100 % et/ou l'action directe d'eau liquide à une température dans la plage de 30 à 100 °C sur la surface de la masse à mouler.

13. Utilisation d'un séchoir à lit fluidisé et/ou d'un séchoir à flux lors de la préparation d'une masse à mouler thermoplastique telle que décrite dans la revendication 1 pour le séchage du copolymère greffé B qui présente une teneur en eau inférieure ou égale à 50 % en poids, après la polymérisation en émulsion, la précipitation et la déshydratation mécanique du copolymère greffé B pour l'atténuation de la teneur totale en monomères résiduels dans le copolymère greffé B.

14. Masse à mouler thermoplastique pouvant être obtenue par un procédé selon l'une quelconque des revendications 1 à 9, la masse à mouler thermoplastique contenant des dépôts de sel et au moins 80 % des dépôts de sel, par rapport au nombre total des dépôts de sel, présentant une grosseur inférieure à 0,3 mm.

15. Pièce moulée préparée à partir d'une masse à mouler thermoplastique selon la revendication 14.

Fig. 1

34

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014170407 A
- WO 2012022710 A
- EP 022200 A
- EP 0734825 A
- WO 200162812 A
- WO 200162848 A
- DE 19649255 A
- WO 2004050765 A
- WO 2013160029 A
- WO 2013160249 A
- WO 2014122179 A
- EP 1567596 A
- DE 102007029010 A
- DE 3840293 A
- WO 2010094416 A
- EP 1415693 A
- DE 2420358 A
- DE 2724360 A
- DE 19713509 A
- DE OS3639904 A
- DE OS3913509 A
- DE 1495626 A
- DE 2232877 A
- DE 2703376 A
- DE 2714544 A
- DE 3000610 A
- DE 3832396 A
- DE 3077934 A
- DE 10008420 A
- EP 2606073 A
- WO 2014170407 A1

**In der Beschreibung aufgeführte Nicht-Patentliteratur**

- Trocknungstechnik. **KRISCHER ; KRÖLL.** Trockner und Trocknungsverfahren. Springer-Verlag, 1959, 275-282
- **D. GEHRMANN et al.** Trocknungstechnik in der Lebensmittelindustrie. Behr's Verlag GmbH & Co.KG, 2009
- Zweiter Band. **K. KRÖLL.** Trockner und Trocknungsverfahren. Springer-Verlag, 1959, 282
- **YONGCHUN Z. et al.** Explosion Risk Management of ABS Powder Processes. *Proceedings of the 8th International Conference on Measurement and Control of Granular Materials (MCGM),* 2009
- **W. SCHOLTAN ; H. LANGE.** *Kolloid Z. u. Z. Polymere,* 1972, vol. 250, 782-796
- **HOUBEN-WEYL.** Methoden der Organischen Chemie, Makromolekulare Stoffe. Thieme Verlag, 1961, vol. 1, 307
- **HOUBEN-WEYL.** Methoden der Organischen Chemie, Makromolekulare Stoffe. Thieme Verlag, 1961, vol. 1, 339
- **KRISCHER ; KRÖLL.** Trocknungstechnik, Zweiter Band, Trockner und Trocknungsverfahren. Springer-Verlag, 1959
- **D. GEHRMANN et al.** Trocknungstechnik in der Lebensmittelindustrie. Behr's Verlag GmbH & Co.KG, 2009, 143-145
- **K. KIRCHNER ; H. SCHLAPKOHL.** *Makromol. Chem.,* 1976, vol. 177, 2031-2042